# EUROPÄISCHE PATENTSCHRIFT

(11) **EP 2 152 548 B1**
(45) Veröffentlichungstag und Bekanntmachung des Hinweises auf die Patenterteilung: **10.09.2014**
(21) Anmeldenummer: 08749182.5
(22) Anmeldetag: 27.04.2008
(51) Int. Cl.: B60R 7/04, B60R 7/10, B60R 11/00

(54) **VORRICHTUNG ZUM AUFHÄNGEN VON GEGENSTÄNDEN**
DEVICE FOR SUSPENDING OBJECTS
DISPOSITIF DE SUSPENSION D'OBJETS

(30) Priorität: 26.04.2007 DE 102007020157; 10.05.2007 DE 102007022454; 20.09.2007 DE 102007045171
(43) Veröffentlichungstag der Anmeldung: 17.02.2010
(73) Patentinhaber: Kinetix AG, 8750 Glarus (CH)
(72) Erfinder: ACKERET, Peter, CH-8048 Zürich (CH)
(74) Vertreter: DREISS Patentanwälte PartG mbB
(86) Internationale Anmeldenummer: PCT/EP2008/003409
(87) Internationale Veröffentlichungsnummer: WO 2008/131944

(56) Entgegenhaltungen:
- EP-A- 0 844 138
- WO-A-93/25411
- WO-A-2005/061275
- DE-A1- 19 612 232
- DE-B3-102005 051 708
- DE-U1-202004 008 944
- FR-A- 2 787 403
- US-A1- 2006 032 996

## Beschreibung

Die Erfindung betrifft eine Vorrichtung zum Aufhängen von Kleidungsstücken an ein Fahrzeugsitzteil.

Kleideraufhängevorrichtungen mit festen oder zusammenfaltbaren Kleiderbügeln, die auf der Rückseite einer Rückenlehne oder Kopfstütze eines Kraftfahrzeugsitzes fest eingebaut oder abnehmbar montiert werden können, sind aus Dokumenten aus dem Stand der Technik hinlänglich bekannt, z.B. aus DE 20 2004 005 875 U1, US 5,383,588 und EP 0 844 138 A1. Im Handel sind feste, meist einteilig aus Stahldraht oder Kunststoff gefertigte Kleiderbügel, welche mittels Adapterstücken an den Haltestangen der Kopfstützen abnehmbar befestigt sind sowie Vorrichtungen zum Aufhängen mehrerer Kleiderbügel erhältlich. Solche feste Vorrichtungen beanspruchen viel Platz und behindern das Sitzen sowie das Ein- und Aussteigen von Personen auf dem Rücksitz. Aus diesem Grund, insbesondere aber auch aus Sicherheitsgründen, müssen diese sperrigen Vorrichtungen, auch auf Verlangen der Fahrzeughersteller, jedes Mal entfernt und bspw. im Kofferraum des Fahrzeuges untergebracht werden, wenn auf dem Rücksitz Personen befördert werden.

Es sind deshalb auch verschiedene Vorrichtungen zum Aufhängen von Kleidungsstücken für den Einbau in Kraftfahrzeugen vorgeschlagen worden, welche zur Platz sparenden und sicheren Aufbewahrung zusammengefaltet und in der Rückenlehne und/oder Kopfstütze von Kraftfahrzeugsitzen untergebracht werden können. Solche Vorrichtungen, die z.B. in DE 102 57 852 A1, DE 103 40 083 A1 oder WO 2004/058536 A1 gezeigt sind, bedingen jedoch entsprechende Vorkehrungen durch den Fahrzeughersteller und sind daher für die Nachrüstung nicht geeignet.

Auch werden zur Erhöhung von Beinfreiheit und Sitzkomfort der Passagiere auf dem Rücksitz und zur Verbesserung der Sicht aller Insassen aus dem Fahrzeug die Dicke von Rückenlehnen und die Dicke und Breite von Kopfstützen tendenziell immer mehr reduziert. Fahrzeugsitze und Kopfstützen sind zudem markante Designelemente zur Aufwertung des Interieurs von Kraftfahrzeugen, mit Konturen und Materialien, welche von Modell zu Modell stark variieren und die Einbaumöglichkeiten einer standardisierten Vorrichtung zusätzlich beschränken.

Der verbleibende Einbauraum in Rückenlehnen und/oder Kopfstützen von Kraftfahrzeugsitzen wird auch immer mehr für sicherheits- und komfortrelevante Systeme und Vorrichtungen benötigt, wie bspw. elektrische oder pneumatische Positions- und Konturanpassungen, Sitzheizungen bzw. Kühlungen oder Belüftungen, Sicherheitssysteme wie aktive Kopfstützen zum Schutz gegen Auffahrunfälle und Airbags; auch Bildschirme und Lautsprecher von sog. "Rear Seat Entertainment Systems" werden vermehrt auf der Rückseite von Rückenlehnen und/oder Kopfstützen von Kraftfahrzeugsitzen untergebracht.

Die im Stand der Technik vorgeschlagenen Konzepte für zusammenfaltbare Vorrichtungen sind aber nicht nur wegen der erwähnten Probleme für den Einbau in Kraftfahrzeugen ungeeignet; oft ist auch deren Handhabung so umständlich, dass dafür beide Hände benötigt werden. Dies ist vor allem dann mühsam, wenn sich die Vorrichtung noch in der zusammengefalteten Nichtgebrauchslage befindet und die aufzuhängenden Kleidungsstücke mit einer Hand gehalten werden und die Bereitstellung der Vorrichtung von außerhalb des Kraftfahrzeugs durch die offene Fahrzeugtüre erfolgt.

WO 2004/058536 A1 zeigt eine Vorrichtung zum Aufhängen von Kleidungsstücken, bei der eine Befestigungseinrichtung an Kopfsstützenstangen eines Fahrzeugsitzes anschließbar ist. Ein Kleiderbügel, dessen Verlauf an die rückwärtige Kontur der Befestigungseinrichtung angepasst ist, ist in einer Nichtgebrauchsstellung an diese angelegt und kann zur Verlagerung in eine Gebrauchsstellung mittels einer Linearführung, die viele Teile und insbesondere einen Schlitten erfordert, nach hinten ausgezogen werden. Anschließend muss der Bügel um 90° nach oben verschwenkt werden. Diese Bauweise benötigt systembedingt viel Bautiefe und Bauhöhe zwischen Rückenlehne und Kopfstütze. Dieser Raum ist jedoch aus Sicherheitsgründe begrenzt, damit auch kleine Passagiere in dem vorderen Sitz diesen optimal nutzen können. Die Höhe, in der Kleidungsstücke aufgehangen werden können, liegt in der Ebene der Kopfstützenstangen und ist damit für viele Kleidungsstücke zu niedrig. Die Bügelkontur, insbesondere die spitzen Enden, gefährden in der Gebrauchslage hinten sitzende Passagiere. Von in der Nichtgebrauchslage seitlich über den Sitz nach vorne vorstehenden Bügelenden geht ebenfalls eine Verletzungsgefahr für einen in dem Frontsitz sitzenden Passagier aus.

JP 10-315836 zeigt einen im Wesentlichen vertikal verlagerbaren Kleiderbügel, an dem ausschwenkbare Bügelarme angelenkt sind. Der Kleiderbügel ist an einem Sockelelement geführt, das anstelle eines Fahrzeugsitzes in einem Fahrzeug angebracht ist. Die Führungseinrichtung für den Kleiderbügel ist in Form von Teleskopstangen ausgebildet und liegt im Wesentlichen frei.

DE 20 2006 006 375 zeigt einen Kleiderbügel, der an einer Rückseite einer durchgängigen Rückenlehne eines Sportsitzes für Kraftfahrzeuge angehängt werden kann. Hierzu ist an der Rückenlehne des Sportsitzes ein Haken befestigt, an den der Kleiderbügel aufgehängt werden kann. Bei Nichtgebrauch kann der Kleiderbügel von dem Haken abgenommen und verstaut werden. Ein Nachteil hierbei ist, dass der Kleiderbügel bei Nichtgebrauch einen separaten Stauraum erfordert.

WO 91/08928 A1 zeigt eine Vorrichtung zum Aufhängen von Kleidungsstücken, die einen Kleiderbügel an eine Befestigungseinrichtung anschließt, die zwischen Fahrzeugsitz und Kopfstütze eingesetzt wird. Die Befestigungseinrichtung stützt sich mit einer Platte gegen die rückwärtige Flächen von Sitz und Kopfstütze ab und blockiert diese damit, so dass keine Verschwenkung der Kopfstütze relativ zu dem Sitz mehr möglich ist. Überdies steht hierdurch zwangläufig die Platte in den Sitzraum vor und stellt bei Bremsung für einen Passagier ein gefährliches Hindernis dar, an dem er sich verletzen kann. Der an einen Haken der Platte anschließbare separate Bügel ist für viele Kleidungsstücke zu tief aufgehangen, so dass diese nicht beabstandet vom Boden hängen. Bei geneigtem Rücksitz ist das Anbringen von Kleidungsstücken problematisch.

Die gattungsbildende WO 93/25411 A1 zeigt eine an Kopfstützenstangen der Kopfstütze eines Fahrzeugsitzes anbringbare Befestigungseinrichtung, an die eine vertikale Strebe anschließbar ist, von der senkrecht eine einen Bügel mit zwei Bügelarmen bildende Stange starr und unbeweglich absteht. Von diesen vorstehenden, spitzen Teilen geht eine bedeutende Verletzungsgefahr für Passagiere aus. Montage und Demontage sind umständlich und erfordern Werkzeug sowie viele Einzelteile, die leicht verloren gehen können. Auch bei entferntem Bügel ragt eine Nase der Befestigungseinrichtung in Richtung des auf der Rückbank sitzenden Passagiers vor und stellt eine große Gefahrenquelle dar.

WO 2006/119934 A1 zeigt eine Rückenlehne eines Fahrzeugsitzes mit einer Vorrichtung zum Aufhängen von Kleidungsstücken, der an einer Kopfstützenhalterung des Fahrzeugsitzes anbringbar ist. Zum Anbringen und zum Abbauen muss die Kofpstütze mit den Kopfstützenstangen in aufwändiger Weise jedesmal von dem Fahrzeugsitz abgenommen werden. Bei Nichtgebrauch muss die Vorrichtung nach unten in einen unteren Bereich des Fahrzeugsitzes geklappt werden, wo die Beinfreiheit eines Passagiers stark eingeschränkt wird und überdies ein hohes Verletzungsriiko bildet. Zudem muss zum Herunterklappen eine Arretierung gelöst werden, die die den Bügel sonst in Gebrauchslage festhält. Wird ein Passagier bei aufgestellter Vorrichtung befördert, besteht sowohl die Gefahr, dass er von der herunterschwenkenden Vorrichtung verletzt wird, als auch dass er bei einer plötzlichen Bremsung gegen die vor der Kopfstütze ein Hindernis bildende Vorrichtung geschleudert wird und sich an dieser verletzt. Ferner behindert die Vorrichtung einen Passagier beim Aussteigen.

Entsprechend liegt der Erfindung die Aufgabe zugrunde, eine Vorrichtung zum Aufhängen von Kleidungsstücken, insbesondere für den Einbau in Kraftfahrzeugen zu schaffen, die platzsparend an einem Fahrzeugsitz anbringbar ist und in ihrer Gebrauchsstellung einen ausreichenden Abstand zum Fahrzeugsitz und Fahrzeugboden gewährleistet.

Die Vorrichtung soll ferner so gestaltet sein, dass sie in ästhetisch ansprechender Weise in das Interieur verschiedener Fahrzeugemodelle integriert werden kann. Zudem soll die Vorrichtung so ausgebildet sein, dass möglichst kein Verletzungsrisiko für Passagiere von ihr ausgeht. Ferner soll eine Befestigungseinrichtung angegeben werden, an die auch im Austausch mehrere verschiedene Vorrichtungen alternativ auf einfache Weise befestigt werden können.

Erfindungsgemäß wird diese Aufgabe durch eine Vorrichtung zum Aufhängen von Gegenständen mit den Merkmalen des Anspruchs 1 gelöst.

Eine erfindungsgemäße Vorrichtung zum Aufhängen von Kleidungsstücken an ein Fahrzeugsitzteil, wie eine Rückenlehne , Kopfstütze oder eine Kopfstützenhalterung eines Fahrzeugsitzes, umfasst ein Trägerelement, das dem Fahrzeugsitzteil zugeordnet ist, ein Stützelement, das sich im Wesentlichen vertikal nach oben erstreckt und an seinem unteren Ende über eine lösbare Kupplung mit dem Trägerelement beweglich verbunden ist, und zwei Bügelarme, die an einem oberen Ende des Stützelements angeordnet sind und gemeinsam mit dem Stützelement einen kleiderbügelartigen Ständer bilden, wobei das Stützelement mit den Bügelarmen zwischen einer Nichtgebrauchsstellung und einer Gebrauchsstellung verlagerbar und in der NichtgebrauchsStellung frei gegen die hintere Breitseite der Kopfstütze bewegbar ist, und wobei die Gebrauchsstellung durch einen Anschlag so definiert ist, dass die Bügelarme zum Aufhängen zumindest eines Kleidungsstücks einen von der hinteren Breitseite der Kopfstütze ausreichenden Abstand einnehmen.

Die erfindungsgemäße Vorrichtung hält das Stützelement und die daran angeordneten Bügelarme in einem ausreichenden Abstand zu der hinteren Breitseite des Fahrzeugsitzes und schafft so eine Möglichkeit, Kleidungsstücke schonend aufzuhängen. Insbesondere kann der Abstand so bemessen, voreingestellt und/oder voreinstellbar sein, dass die Bügelarme im Wesentlichen vor einer Rückbank angeordnet sind, und so die Höhe bis zum Boden des Fahrzeugs ausgenutzt werden kann. Zugleich bietet die erfindungsgemäße Vorrichtung die Möglichkeit, das Stützelement mit dem Trägerelement zu kuppeln, wobei diese zueinander beweglich sind, insbesondere um eine Gelenkachse. Damit verkörpert die erfindungsgemäße Vorrichtung zugleich formschlüssige Anschließbarkeit, die lösbar bzw. aufhebbar ist, als auch Beweglichkeit. In der Nichtgebrauchsstellung kann das Stützelement mit den Bügelarmen frei gegen die Kopfstütze schwenken, und gegen diese in Anlage gelangen bzw. bei einem Nachgeben der Kopfstütze dieser folgen, so dass die Gefahr von einem sonst abstehenden Teil beseitigt ist. Auch beim Aussteigen kann der Bügel so besser aus dem Weg geräumt werden.

Die Vorrichtung kann zwei Bügelarme umfassen, die miteinander verbunden sind und gemeinsam die Gestalt einer Ellipse aufweisen, wobei das Stützelement mit der Ellipse verbunden ist.

Die Vorrichtung erreicht dann durch die Bügelarme, die die Gestalt einer Ellipse aufweisen, eine gute Anpassung an eine Vielzahl von Kleidungsstücken, und zeichnet sich überdies durch eine ansprechende und ästhetische Erscheinung aus. Darüber hinaus weist die zumindest überwiegend geschlossene Kontur der Ellipse eine hohe Stabilität und Verwindungssteife auf, mit dem Ergebnis, dass Gewicht und Materialeinsatz reduziert sind. Durch die gleichmäßige Verteilung der Masse liegt die Vorrichtung auch angenehm in der Hand. Zugleich kann das Stützelement auf Grund der eigenen Erstreckung der Ellipse in vertikaler Richtung, die im Wesentlichen durch die Nebenachse der Ellipse definiert wird, kurz ausgebildet sein, insbesondere dann, wenn das Stützelement an einen unteren Ellipsenabschnitt ansetzt.

Durch die abgerundete bzw. stumpfe äußere Kontur der Ellipse ist die Verletzungsgefahr minimiert. Im Falle einer Ellipse mit zentraler Ausnehmung gilt dies auch für die innere Kontur.

Weitere vorteilhafte und bevorzugte Ausgestaltungen der erfindungsgemäßen Vorrichtung verbessern den Bedienkomfort weiter: So kann durch eine Rundung bzw. Krümmung der Ellipse entlang ihrer Hauptache ein besserer Sitz der Kleidung erzielt werden. Wenn das Stützelement mit einem Gelenk ausgestattet ist, kann die Vorrichtung in unterschiedlichen Gebrauchsstellungen platziert werden, in welchen sie vorzugsweise auch festsetzbar ist. Durch ein weiches Material wird die Verletzungsgefahr weiter herabgesetzt.

Eine erfindungsgemäße Vorrichtung eignet sich zum Aufhängen von Gegenständen, insbesondere Kleidungsstücke, an einem Körper zum Beispiel in Form einer Rückenlehne oder einer Kopfstütze eines Fahrzeugsitzes oder einer Kopfstützenhalterung. Dabei können die Bügelarme in ihrer Gebrauchsstellung horizontal oder schräg nach unten angeordnet bzw. ausgerichtet sein und gemeinsam mit dem Stützelement einen kleiderbügelartigen Ständer bilden, der zum Aufhängen zumindest eines Gegenstands, insbesondere eines Kleidungsstücks von der hinteren Breitseite der Rückenlehne und/oder der Kopfstütze ausreichend beabstandet ist, und wobei das Stützelement und die Bügelarme in ihrer jeweiligen Nichtgebrauchsstellung im Wesentlichen parallel zueinander und im Wesentlich parallel zur hinteren Breitseite der Rückenlehne und/oder der Kopfstütze angeordnet sind.

Eine solche Vorrichtung eignet sich insbesondere für eine platzsparende Anbringung an einer Rückenlehne oder einer Kopfstütze eines Fahrzeugsitzes oder an einer Kopfstützenhalterung des Fahrzeugsitzes, und kann insbesondere als Nachrüstlösung an einem bereits vorhandenen Fahrzeugsitz bzw. dessen Rückenlehne oder dessen Kopfstützenhalterung angebracht werden. Hierzu kann das Trägerelement vorzugsweise als Steckverbindung mit einem Steckelement und einer Aufnahmebuchse ausgebildet sein. Die Aufnahmebuchse kann mittels eines Befestigungselements an der Kopfstützenhalterung angebracht werden. Entsprechend ist am Stützelement das Steckelement angeordnet, welches Steckelement in die Aufnahmebuchse eingesteckt werden kann. An dem Steckelement kann ein verformbarer Rastnocken angeordnet sein, der in einer daran angepassten Ausnehmung in der Aufnahmebuchse einrasten bzw. verrasten kann. Diese Verrastung des Aufnahmenockens in der Ausnehmung kann lösbar oder fest sein. Bei einer lösbaren Verrastung des Aufnahmenockens läßt sich das Steckelement und somit die gesamte Vorrichtung von dem Fahrzeugsitz nach Bedarf abnehmen und nach Bedarf erneut daran befestigen. Alternativ kann die Aufnahmebuchse auch an der Rückenlehne oder an der Kopfstütze angeordnet sein. In die Aufnahmebuchse kann auch ein Zwischenstück mit einem Steckelement und einer weiteren Aufnahmebuchse eingesteckt werden, wobei dann das an dem Stützelement angeordnete Steckelement in die Aufnahmebuchse des Zwischenstücks eingesteckt werden kann. Das Zwischenstück vergrößert den Abstand der Vorrichtung zur hinteren Breitseite der Rückenlehne oder der Kopfstütze und ermöglicht somit verschiedene Abstandsmaße der Vorrichtung zum Fahrzeugsitz.

Mit einer weiteren erfindungsgemäßen Vorrichtung sollen auf einem Rücksitz eines Fahrzeugs befindliche Personen bestmöglich vor eventuellen Verletzungen geschützt werden. Hierzu bildet das Stützelement auf seiner der Kopfstütze und/oder der Rückenlehne des Fahrzeugsitzes abgewandten Seite in Bezug auf die hintere Breitseite der Kopfstütze und/oder der Rückenlehne ein plattenförmiges Schutzschild, das den Bügelarm in seiner Nichtgebrauchsstellung im Wesentlichen überdeckt. Zweckmäßigerweise ist das Stützelement im Wesentlichen mittig bezüglich einer seitlichen Erstreckung der Kopfstütze angeordnet, und kann auf seiner der Kopfstütze abgewandten Seite geringfügig konvex ausgebildet sein.

Alternativ oder ergänzend kann das Schutzschild auf seiner der Kopfstütze abgewandten Seite bezüglich seiner Längsachse eine V-Form aufweisen, die sich in Richtung des Trägerelements verjüngt. Hierdurch ist sichergestellt, dass bei einem an dem Trägerelement angelenkten Stützelement das Gelenk am unteren Ende des Stützelements nicht übermäßig breit ist, und dass das Stützelement an seinem oberen Ende eine breite Aufschlagsfläche ohne scharfe Kanten oder dergleichen bildet. Eine Außenfläche des Stützelements kann auf seiner der Kopfstütze abgewandten Seite mit einem Weich kunststoff oder dergleichen ausgestattet sein, was zu einer angenehmen Haptik führt und des weiteren eine Aufprallenergie dämpft. Eine solche Dämpfung kann auch dadurch erzielt werden, dass das Stützelement um seine Schwenkachse in Richtung der Kopfstütze frei bewegbar bzw. verschwenkbar ist, bis das Stützelement in Kontakt mit der Kopfstütze gelangt. Somit kann sich das Stützelement von hinten an der Kopfstütze abstützen, die die Energie des Aufschlags bzw. des Stützelements aufnimmt. Zweckmäßigerweise ist hierzu die Kopfstütze im Aufschlagbereich des Stützelements verdickt und entsprechend abgepolstert.

Ein weiteres Sicherheitsmerkmal einer Ausführungsform der Vorrichtung besteht darin, dass das Schutzschild bzw. das Stützelement aus zwei im Wesentlichen kongruenten Platten besteht, die über einen im Wesentlichen vertikal verlaufenden Mittelsteg miteinander verbunden sind. Wenn die Bügelarme in ihrer Nichtgebrauchsstellung eingeklappt sind, sind sie geschützt zwischen den beiden Platten aufgenommen und ragen insbesondere nicht in den Aufprallbereich nach außen vor. Ein Schutz vor möglichen Verletzungen ergibt sich auch dadurch, dass die Kontur der gegen die Rückseite der Kopfstütze gerichteten Platte des Schutzschildes im Wesentlichen der Kontur der Rückseite der Kopfstütze entsprechen kann. Hieraus ergibt sich ein großflächiger Kontakt des Stützelements mit der Kopfstütze, wenn das Stützelement bei einem Aufprall um ihre Schwenkachse gegen die Kopfstütze verlagert wird.

In einer alternativen Ausführungsform umfasst die Vorrichtung ein Trägerelement, das an der Rückenlehne oder der Kopfstütze des Fahrzeugsitzes oder der Kopfstützenhalterung angebracht werden kann, ein längliches, mit seiner Längsachse im Wesentlichen vertikal ausgerichtetes Stützelement, das an dem Trägerelement beweglich angebracht und zwischen einer Nichtgebrauchsstellung und einer Gebrauchsstellung im Wesentlichen horizontal verlagert werden kann, ein mit dem Trägerelement fest verbundenes Aufnahmegehäuse, in dem das Stützelement in seiner Nichtgebrauchsstellung zumindest teilweise aufgenommen ist, Bügelarme, die an dem Stützelement um eine quer zur hinteren Breitseite von Rückenlehne und/oder Kopfstütze verlaufende Achse angelenkt und in der Gebrauchsstellung des Stützelements zwischen einer Nichtgebrauchsstellung und einer Gebrauchsstellung verschwenkt werden können, wobei in der Gebrauchsstellung des Stützelements die Bügelarme in ihrer Gebrauchsstellung horizontal oder schräg nach unten angeordnet sind und gemeinsam mit dem Stützelement einen kleiderbügelartigen Ständer bilden, der zum Aufhängen zumindest eines Gegenstands, insbesondere eines Kleidungsstücks, von der hinteren Breitseite der Rückenlehne und/oder der Kopfstütze ausreichend beabstandet ist, und wobei das Stützelement und die Bügelarme in ihrer jeweiligen Nichtgebrauchsstellung im Wesentlichen parallel zueinander und im Wesentlichen parallel zur hinteren Breitseite der Rückenlehne und/oder der Kopfstütze angeordnet sind.

Bei der vorstehend genannten Ausführungsform gewährleistet das Aufnahmegehäuse eine schützende Unterbringung für das Stützelement, wenn dieses in seine Nichtgebrauchsstellung verlagert ist. Zweckmäßigerweise kann das Stützelement in seiner Nichtgebrauchsstellung im Wesentlichen vollständig in dem Aufnahmegehäuse aufgenommen sein, wobei zum Ausklappen der Bügelarme in ihre Gebrauchsstellung zunächst das Stützelement aus dem Aufnahmegehäuse heraus in seine Gebrauchsstellung verlagert wird. Das Aufnahmegehäuse kann im Wesentlichen hinter der Kopfstütze und im Wesentlichen parallel zur hinteren Breitseite der Kopfstütze angeordnet sein, wobei die Kontur der der Rückseite der Kopfstütze gegenüberliegenden Außenfläche des Aufnahmegehäuses im Wesentlichen an die Kontur der Rückseite der Kopfstütze angepasst ist. Dies wirkt sich in einer platzsparenden Anbringung der Vorrichtung an dem Fahrzeugsitz bzw. hinter dessen Kopfstütze aus. Eine weitere Platzersparnis ergibt sich dadurch, wenn die Kopfstütze eine Ausnehmung aufweist, in der das Aufnahmegehäuse der Vorrichtung zumindest teilweise aufgenommen ist.

Bei einer weiteren Ausführungsform der Vorrichtung kann an oder in dem Stützelement ein Bügelhalter längsverschiebbar gelagert sein, der zwischen einer Nichtgebrauchsstellung, in der er im Wesentlichen im Stützelement aufgenommen oder davon verdeckt ist, und einer Gebrauchsstellung, in der er mit einem freien Ende teleskopartig aus dem Stützelement ausgefahren ist, verschoben werden kann. Der Vorteil einer solchen Vorrichtung liegt darin, dass der Aufhängepunkt an dem Bügelhalter erhöht wird, so dass ein darin aufgehängter Gegenstand bzw. ein Kleidungsstück den Fahrzeugboden nicht berührt. Zweckmäßigerweise kann der Bügelhalter an seinem freien Ende mit einer Schutzkappe versehen sein, die in der Nichtgebrauchsstellung des Bügelhalters seine Austrittsöffnung in dem Stützelement im Wesentlichen verschließt. Diese Schutzkappe kann aus einem Weichkunststoff hergestellt sein, die zudem bei teleskopartig ausgefahrenem Bügelhalter die Gefahr von Verletzungen herabsetzt bzw. ausschließt.

Eine Befestigungseinrichtung zum Anschließen einer Vorrichtung, insbesondere zum Aufhängen von Kleidungsstücken, an zwei voneinander beabstandeten Kopfstützstangen eines Fahrzeugsitzes kann umfassen eine Befestigungsplatte, und eine Gegenplatte, wobei die zwei Kopfstützstangen zwischen der Befestigungsplatte und der Gegenplatte einspannbar sind, wobei zwischen der Befestigungsplatte und Gegenplatte eine Aufnahmebuchse angeordnet ist, wobei die Aufnahmebuchse fest mit einer von Befestigungsplatte und Gegenplatte verbunden ist, wobei die Aufnahmebuchse Mittel zum formschlüssigen Aufnehmen eines Steckelements der Vorrichtung aufweist, und wobei eine manuell lösbare Verriegelung vorgesehen ist, die das Steckelement in der Aufnahmebuchse arretiert.

Die Befestigungseinrichtung kann sowohl dauerhaft als nur vorübergehend mit dem Fahrzeugsitz verbunden werden. Durch eine Ausgestaltung, bei der die Befestigungsplatte und die Gegenplatte innerhalb der Flucht des FahrzeugSitzes und der Kopfstütze bleiben, ist sichergestellt, dass auf der Rückbank sitzende Passagiere nicht durch vorstehende und/oder scharfkantige Teile verletzt werden. Die manuelle Bedienung ermöglicht es, schnell und mit wenig Aufwand eine Vorrichtung auch mehrfach an die Befestigungseinrichtung anzuschließen und wieder herauszunehmen. Hierdurch muss bei einer höhenverstellbaren Vorrichtung deren Höhe nicht jedes mal aufs Neue eingestellt werden, vielmehr definiert die Aufnahmebuchse diese. Durch die formschlüssige Aufnahme und Arretierung kommt es nicht auf die Kraft der Bedienperson an. Bei Ausbildung der nach außen weisenden Konturbereiche der Befestigungsplatte und/oder der Gegenplatte aus einem Weichmaterial wird die Verletzungsgefahr weiter herabgesetzt.

Vorzugsweise sind die Mittel zum formschlüssigen Aufnehmen eines Steckelements als Schnappmittel ausgebildet, bei denen ein spannbares Arretierglied sich bei Erreichen einer Einsatzposition in eine entsprechende Vertiefung eindringt. Weist diese einen Hinterschnitt oder dergleichen auf, kann dieses manuell wieder ausgerückt werden. Die manuell lösbare Verbindung kann aber auch ein Sicherungsstift oder dergleichen sein.

Ein System, bestehend aus der Befestigungseinrichtung und einer erfindungsgemäßen Vorrichtung zum Aufhängen von Kleidungsstücken kann flexibel eingesetzt werden. Insbesondere können verschieden ausgestaltete erfindungsgemäße Vorrichtungen an derselben Befestigungseinrichtung angebracht werden.

Weitere Vorteile und Ausgestaltungen der Erfindung ergeben sich aus den Unteransprüchen, der Beschreibung und den beiliegenden Zeichnungen.

Die Erfindung wird nachstehend anhand von bevorzugten Ausführungsbeispielen unter Bezugnahme auf die anliegenden Zeichnungen ausführlicher beschrieben.
- Fig. 1: zeigt eine Perspektivansicht eines oberen Teils einer Rückenlehne eines Fahrzeugsitzes mit einer Kopfstütze, wobei an den Kopfstützenhalterungen eine erfindungsgemäße Vorrichtung angebracht ist.
- Fig. 2: zeigt die Vorrichtung von Fig. 1 in einer Seitenansicht.
- Fig. 3: zeigt eine Perspektivansicht der Vorrichtung von Fig. 1, wobei an einem Stützelement angelenkte Bügelarme in ihre Gebrauchsstellung aufgeschwenkt sind.
- Fig. 4: zeigt die Vorrichtung von Fig. 3 in einer Seitenansicht.
- Fig. 5: zeigt eine Perspektivansicht der Vorrichtung analog zu Fig. 1, wobei ein an dem Stützelement angelenktes Aufhängeelement in Form eines Bügelhalters in seine Gebrauchsstellung ausgeklappt ist.
- Fig. 6: zeigt die Vorrichtung von Fig. 5 in einer Seitenansicht.
- Fig. 7: zeigt eine Perspektivansicht eines oberen Teils einer Rückenlehne eines Fahrzeugsitzes mit einer Kopfstütze, wobei an den Kopfstützenhalterungen eine weitere Ausführungsform der erfindungsgemäßen Vorrichtung angebracht ist.
- Fig. 8: zeigt die Vorrichtung von Fig. 7 in einer Seitenansicht.
- Fig. 9: zeigt eine Perspektivansicht der Vorrichtung von Fig. 7, wobei ein Stützelement und daran angelenkte Bügelarme jeweils in ihre Gebrauchsstellung ausgeklappt sind.
- Fig. 10: zeigt die Vorrichtung von Fig. 9 in einer Seitenansicht.
- Fig. 11: zeigt eine Perspektivansicht der Vorrichtung analog zu Fig. 7, wobei ein an dem Stützelement angelenktes Aufhängeelement in Form eines Bügelhalters in seine Gebrauchsstellung ausgeklappt ist.
- Fig. 12: zeigt die Vorrichtung von Fig. 11 in einer Seitenansicht.
- Fig. 13: zeigt eine perspektivische Explosionsansicht der Vorrichtung gemäß Fig. 1 mit den Bauelementen, die zur Befestigung an der Kopfstützenhalterung erforderlich sind.
- Fig. 14: zeigt eine Längsschnittansicht entlang der Linie I-I von Fig. 13.
- Fig. 15: zeigt eine Explosionsdarstellung einer Vorrichtung gemäß Fig. 1 mit Bauelementen, die zur Befestigung an einer Kopfstützenhalterung erforderlich sind.
- Fig. 16: zeigt zeigt eine Explosionsansicht einer Teil-Querschnittsansicht von Bauelementen gemäß Fig. 15.
- Fig. 17: zeigt eine teilweise freigeschnittene einer mit Steckelement und Aufnahmebuchse an einem Fahrzeugsitz aufgenommenen Vorrichtung gemäß Fig. 1.
- Fig. 18: zeigt ein weiteres bevorzugtes Ausführungsbeispiel einer erfindungsgemäßen Vorrichtung zum Aufhängen von Kleidungsstücken in einer teilweise geschnittenen Ansicht von vorne.
- Fig. 19: zeigt noch ein weiteres bevorzugtes Ausführungsbeispiel einer erfindungsgemäßen Vorrichtung in einer Ansicht von vorne.
- Fig. 20: zeigt die Vorrichtung aus Fig. 19 in einer Seitenansicht.
- Fig. 21: zeigt die Vorrichtung aus Fig. 19 und 20 in einer perspektivischen Ansicht von hinten.
- Fig. 22: zeigt die Vorrichtung aus Fig. 19 bis 21 vor dem Zusammenbau mit einem Fahrzeugsitz.
- Fig. 23: zeigt die Vorrichtung aus Fig. 22 nach dem Anschluss an einen Fahrzeugsitz.
- Fig. 24: zeigt noch ein weiteres bevorzugtes Ausführungsbeispiel einer erfindungsgemäßen Vorrichtung zum Aufhängen von Kleidungsstücken in einer teilweise geschnittenen Seitenansicht, angebracht an einem Fahrzeugsitz.
- Fig. 25: zeigt die Vorrichtung aus Fig. 24 vor dem Anschluss an den Fahrzeugsitz.
- Fig. 26: zeigt die Vorrichtung aus Fig. 24 und 25 perspektivisch von hinten nach dem Anschluss an den Fahrzeugsitz.
- Fig. 27: zeigt noch ein weiteres bevorzugtes Ausführungsbeispiel einer erfindungsgemäßen Vorrichtung zum zum Aufhängen von Kleidungsstücken in einer teilweise geschnittenen Seitenansicht, angeschlossen an einen Fahrzeugsitz.
- Fig. 28: zeigt die Vorrichtung aus Fig. 27 in einem eingefalteten Zustand.
- Fig. 29: zeigt eine Sicht einer Ellipse von hinten, wie sie für eine erfindungsgemäße Vorrichtung zum Aufhängen von Kleidungsstücken eingesetzt werden kann.
- Fig. 30: zeigt eine Seitenansicht der Ellipse aus Fig. 29.
- Fig. 31: zeigt eine Draufsicht auf die Ellipse aus Fig. 29 und 30.

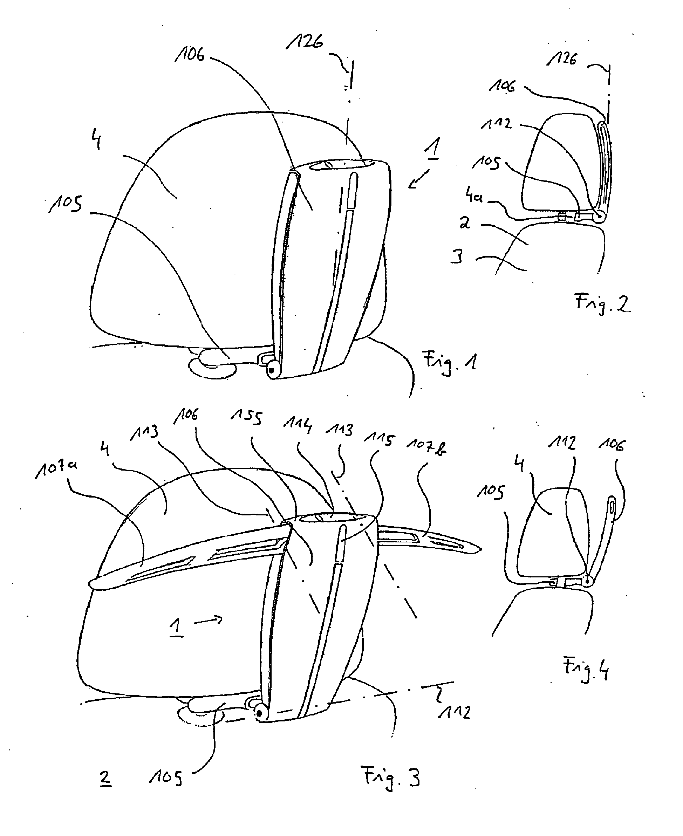

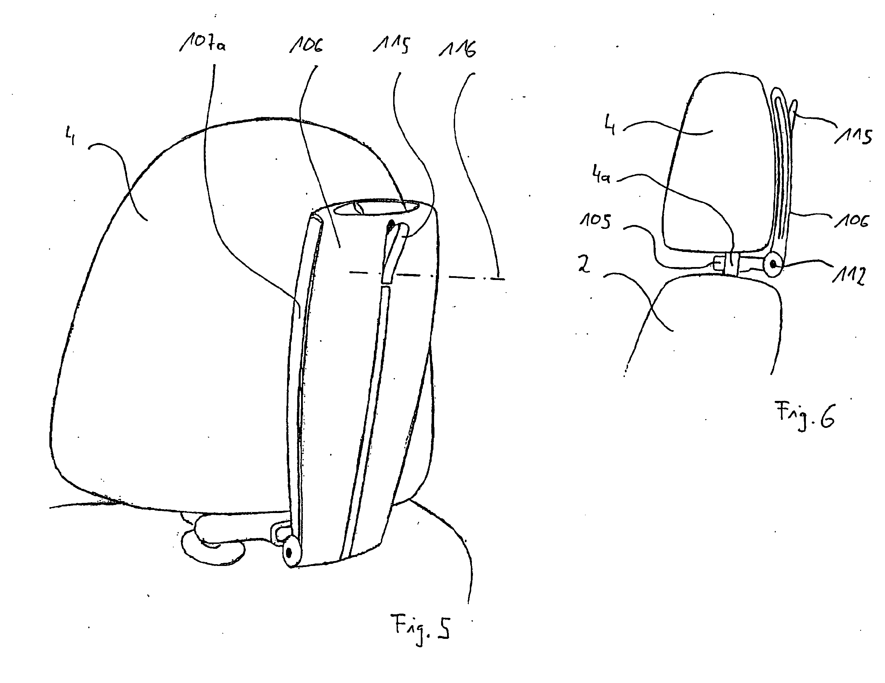

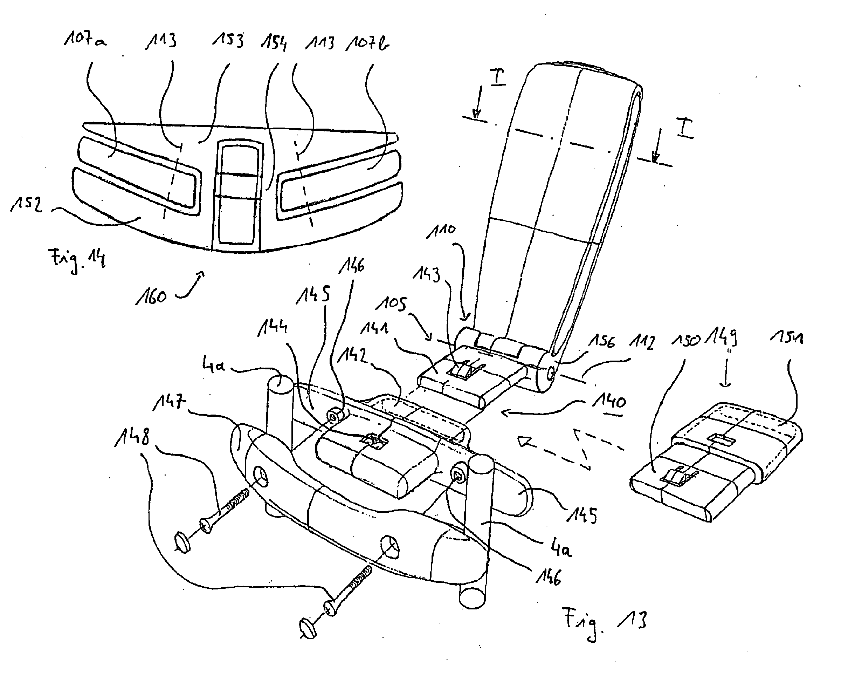

Eine erfindungsgemäße Vorrichtung 1 ist insbesondere zur nachträglichen Montage an Kopfstützenstangen eines Körpers in Form eines Fahrzeugsitzes 3 vorgesehen. Bei dem Fahrzeugsitz 3 handelt es sich um eine herkömmliche Ausführungsform, an dessen Rückenlehne 2 eine Kopfstütze 4 mittels Kopfstützenstangen 4a befestigt ist. Die Vorrichtung 1 dient je nach Gebrauchsstellung von Bügelarmen bzw. Aufhängelement zum Aufhängen eines Jackets bzw. von Kleidersäcken, auf Kleiderbügeln transportierten Kleidungsstücken oder dergleichen. Nachfolgend ist unter Bezugnahme auf die Figuren 1 bis 6 eine erste Ausführungsform der Vorrichtung 1 erläutert. Die Vorrichtung 1 umfasst ein Trägerelement 105, das mittels einer geeigneten Befestigungseinrichtung (Figur 13) an den Kopfstützenstangen 4a befestigt ist. Die Vorrichtung 1 umfasst des weiteren ein längliches Stützelement 106 und zwei Bügelarme 107a, 107b, die an entgegengesetzten Seiten des Stützelements 106 um eine quer zur hinteren Breitseite der Kopfstütze 4 verlaufende Achse 113 (Figur 3) angelenkt sind. Das Stützelement 106 ist um eine im Wesentlichen parallel zur hinteren Breitseite der Kopfstütze 4 und im Wesentlichen horizontal verlaufende Achse 112 an dem Trägerelement 105 angelenkt. Des weiteren ist an dem Stützelement 106 ein Aufhängeelement in Form eines Kleiderhakens 115 angelenkt. Der Kleiderhaken 115 kann um eine im Wesentlichen parallel zur hinteren Breitseite der Kopfstütze 4 und im Wesentlichen horizontal verlaufende Achse 116 (Figur 5) zwischen einer Nichtgebrauchsstellung (Figur 1) und einer Gebrauchsstellung (Figur 5, Figur 6) verschwenkt werden.

In den Figuren 1 und 2 ist das Stützelement 106 in seine Nichtgebrauchsstellung verschwenkt, in der es in Richtung der Kopfstütze 4 verlagert ist. Insbesondere die Seitenansicht gemäß Figur 2 zeigt, dass das Stützelement 106 in seiner Nichtgebrauchsstellung einen geringen Abstand zur Kopfstütze 4 aufweist, wobei eine Kontur der der Kopfstütze zugewandten Seite des Stützelements 106 an die Kontur der Außenfläche der Kopfstütze 4 angepasst ist. Hierdurch beansprucht die Vorrichtung 1 in der Nichtgebrauchsstellung des Stützelements 106 einen geringen Einbauraum. In der Nichtgebrauchsstellung ist das Stützelement 106 mit seiner Längsachse 126 im Wesentlichen vertikal ausgerichtet.

In den Figuren 3 und 4 ist das Stützelement 106 um die Achse 112 in seine Gebrauchsstellung ausgeklappt, in der der Anlenkpunkt für die Bügelarme 107a, 107b an dem Stützelement 106 einen vergrößerten Abstand zur Kopfstütze 4 aufweist. Ein Vergleich der Seitenansichten gemäß Figur 4 und Figur 2 zeigt, dass das Stützelement 106 beim Verschwenken von seiner Nichtgebrauchsstellung in seine Gebrauchsstellung lediglich einen spitzen Winkel überstreicht, wobei das obere Ende des Stützelements bzw. der Anlenkpunkt der Bügelarme 107a, 107b an dem Stützelement 106 im Wesentlichen horizontal bewegt wird. Hierbei bleibt das Stützelement 106 mit seiner Längsachse 126 im Wesentlichen vertikal ausgerichtet. Bei ausgeklappten Bügelarmen 107a, 107b bilden diese gemeinsam mit dem Stützelement 106 einen kleiderbügelartigen Ständer, der zum Aufhängen zumindest eines Gegenstands, insbesondere eines Kleidungsstücks in Form eines Jackets oder dergleichen, von der hinteren Breitseite der Kopfstütze 4 ausreichend beabstandet ist. Durch die genannte horizontale Bewegung des Anlenkpunkts der Bügelarme 107a, 107b ist ein gleichbleibend großer Abstand der Bügelarme von einem Fahrzeugboden des Fahrzeugs gewährleistet, so dass ein Verschmutzen eines daran angehängten Jackets oder dergleichen verhindert ist.

Das Ausklappen des Stützelements 106 weg von der Kopfstütze 4 erfolgt gegen einen (nicht gezeigten) festen Anschlag, der die Gebrauchsstellung des Stützelements (Figur 3, Figur 4) definiert. Hieraus ergibt sich für eine Bedienperson eine einfache Handhabung beim Ausklappen des Stützelements 106. An der Achse 112 kann eine Reibungsbremse oder dergleichen vorgesehen sein, die das Stützelement in jeder Schwenklage festhält. Diese Reibungsbremse bewirkt, dass das Stützelement 106 auch in seiner Nichtgebrauchsstellung gemäß der Darstellung von Figur 1 bzw. Figur 2 an der Kopfstütze 4 angelegt bleibt. Hierdurch ist ein ungewolltes Klappern des Stützelements 106 oder gar ein selbsttätiges Ausklappen in seine Gebrauchsstellung verhindert. Optional kann das Stützelement 106 auch in seiner Nichtgebrauchsstellung bzw. in seiner Gebrauchsstellung lösbar verriegelt werden.

Die Bügelarme 107a, 107b sind durch zumindest eine (nicht gezeigte) Feder oder dergleichen in ihre Gebrauchsstellung vorgespannt, wobei die Bügelarme in ihrer Nichtgebrauchsstellung lösbar verriegelt werden können. Nach einem Entriegeln aus der Nichtgebrauchsstellung schwenken die Bügelarme 107a, 107b wie in Figur 3 gezeigt selbsttätig in ihre Gebrauchsstellung auf. Eine Verzahnung oder dergleichen zwischen den Bügelarmen gewährleistet dabei ein synchrones und gleichmäßiges Aufschwenken der beiden Bügelarme nach außen. In ihrer Gebrauchsstellung können die Bügelarme 107a, 107b lösbar verriegelt sein. Ein an einer oberen Stirnseite des Stützelements vorgesehenes Tastenelement 114 ermöglicht ein Entriegeln der Bügelarme 107a, 107b aus ihrer Nichtgebrauchsstellung bzw. Gebrauchsstellung.

Die Reihenfolge des Ausklappens des Stützelements 106 und der Bügelarme 107a, 107b in ihre jeweilige Gebrauchsstellung ist unbeachtlich. Ergänzend zur vorstehenden Erläuterungen der Figuren 3 und 4 können die Bügelarme 107a, 107b auch bereits in der Nichtgebrauchsstellung des Stützelements 106 in ihre Gebrauchsstellung um die Achse 113 ausgeschwenkt werden, wobei das Stützelement 106 erst anschließend ebenfalls in seine Gebrauchsstellung (wie in Figur 3 gezeigt) ausgeklappt wird. In gleicher Weise gilt dies für das Zurückverlagern der Bügelarme 107a, 107b bzw. des Stützelements 106 in ihre jeweilige Nichtgebrauchsstellung.

Die Perspektivansicht gemäß Figur 5 zeigt das Stützelement 106 in seiner Nichtgebrauchsstellung, wobei der Kleiderhaken 115 um seine Achse 116 in seine Gebrauchsstellung ausgeklappt ist. Die Seitenansicht von Figur 6 zeigt den Kleiderhaken 115 ebenfalls in seiner ausgeklappten Gebrauchsstellung.

Optional kann das Stützelement 106 ausgehend von seiner in den Figuren 5 bzw. 6 gezeigten Nichtgebrauchsstellung und bei bereits ausgeklappten Kleiderhaken 115 weiter in seine Gebrauchsstellung um die Achse 112 verschwenkt werden, analog zur Darstellung der Figuren 3 bzw. 4. Hierdurch wird ein Abstand des Kleiderhakens 115 von der hinteren Breitseite der Kopfstütze 4 und insbesondere des Fahrzeugsitzes 3 vergrößert, so dass ein an dem Kleiderhaken 115 aufgehängtes Kleidungsstück damit nicht in Kontakt gelangt.

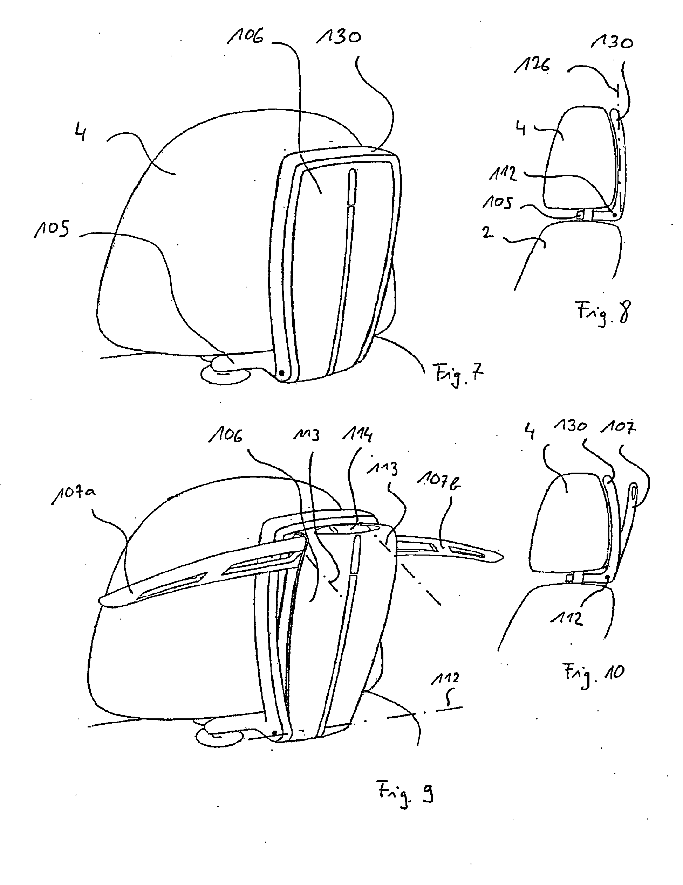

Unter Bezugnahme auf die Figuren 7 bis 12 ist eine weitere Ausführungsform der Vorrichtung 1 erläutert. Gleiche Bauelemente im Vergleich zur Ausführungsform gemäß der Figuren 1 bis 6 sind hierin mit gleichen Bezugszeichen versehen.

Die Vorrichtung gemäß der Ausführungsform der Figuren 7 bis 12 umfasst ein Aufnahmegehäuse 130, das im Wesentlichen hinter der Kopfstütze 4 und im Wesentlichen parallel zur hinteren Breitseite der Kopfstütze 4 angeordnet ist. In den Figuren 7 und 8 ist eine Perspektivansicht bzw. eine Seitenansicht der Vorrichtung 1 mit seinem Aufnahmegehäuse 30 gezeigt. Die Seitenansicht von Figur 8 macht deutlich, dass die Kontur der gegen die Rückseite der Kopfstütze 4 gerichteten Außenseite des Aufnahmegehäuses 130 im Wesentlichen der Kontur der Rückseite der Kopfstütze 4 entspricht bzw. daran angepasst ist. Das Aufnahmegehäuse 130 ist an seinem unteren Ende mit dem Trägerelement 105 fest verbunden, und kann zweckmäßigerweise einstückig mit dem Trägerelement 105 zum Beispiel durch Spritzgießen eines Kunststoffs hergestellt sein.

Die Ausführungsform nach den Figuren 7 bis 12 unterscheidet sich bezüglich der Anlenkung des Stützelements 106 an dem Trägerelement 105, der Bügelarme 107a, 107b an dem Stützelement 106 und des Kleiderhakens 115 an dem Stützelement 106 nicht von der Ausführungsform gemäß der Figuren 1 bis 6. Wie in der Perspektivansicht von Figur 9 gezeigt, läßt sich das Stützelement 106 um seine Achse 112 in die Gebrauchsstellung ausklappen. Hiernach können die Bügelarme 107a, 107b um die Achse 113 ebenfalls in ihrer Gebrauchsstellung ausgeklappt werden. Ein Drücken des Tastenelements 114 entriegelt die Bügelarme 107a, 107b aus ihrer Nichtgebrauchsstellung, so dass hiernach ein automatisches Aufschwenken der Bügelarme in Folge der Federvorspannung in Richtung der Gebrauchsstellung erfolgt. Die Gebrauchsstellung der Bügelarme 107a, 107b und des Stützelements 106 ist in Figur 10 in einer Seitenansicht gezeigt. Wie bereits unter Bezugnahme auf Figur 4 erläutert, ist hierbei der Anlenkpunkt der Bügelarme 107a, 107b an dem Stützelement 106 ausreichend von der hinteren Breitseite der Kopfstütze 4 beabstandet, so dass ein daran aufgehängtes Jacket oder dergleichen weder in Kontakt mit der Kopfstütze 4 noch in Kontakt mit dem Fahrzeugboden gelangt. In ihrer Nichtgebrauchsstellung sind das Stützelement 106 und die Bügelarme 107a, 107b im Wesentlichen vollständig innerhalb des Aufnahmegehäuses 130 aufgenommen (Figur 7, Figur 8). Entsprechend sind das Stützelement 106 und die Bügelarme 107a, 107b insbesondere an ihren seitlichen Rändern gegen äußere Stöße ausreichend geschützt.

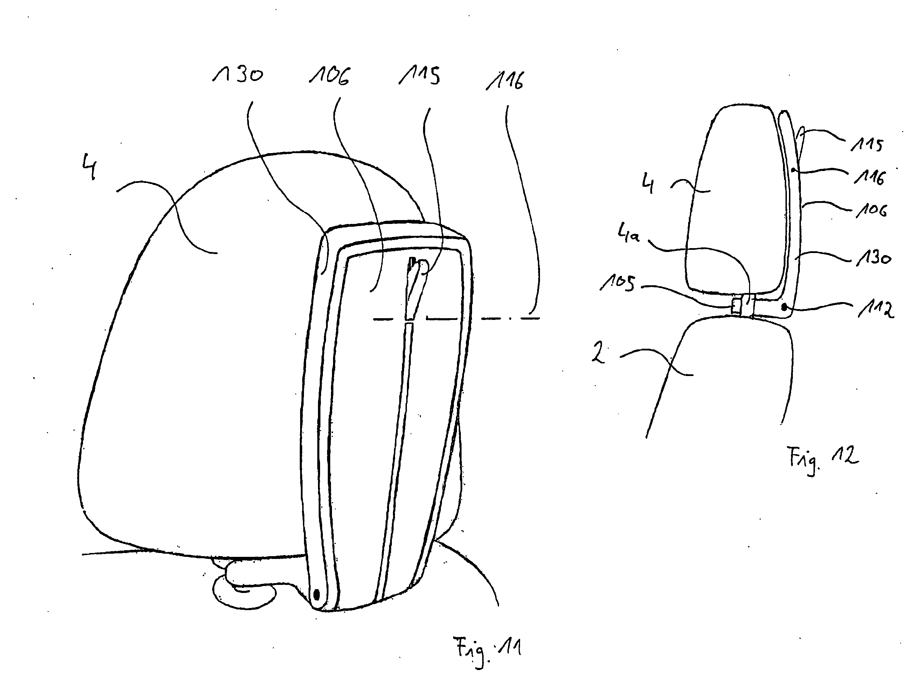

Das Ausklappen des Kleiderhakens 115 in seine Gebrauchsstellung ist in den Figuren 11 und 12 gezeigt. Die Perspektivansicht und die Seitenansicht gemäß der Figuren 11 bzw. 12 entspricht im Wesentlichen den Ansichten der Figuren 5 und 6, so dass zur Vermeidung von Wiederholungen darauf verwiesen wird.

Figur 13 zeigt eine perspektivische Explosionsansicht der Vorrichtung 1 gemäß Figur 1 zusammen mit einer Befestigungseinrichtung, mittels der sich die Vorrichtung 1 an den Kopfstützenstangen 4a des Fahrzeugsitzes 3 befestigen läßt. Das Trägerelement 105 umfasst eine Steckverbindung 140 mit einem Steckelement 141 und einer Aufnahmebuchse 142. An dem Steckelement 141 ist ein verformbarer Rastnocken 143 angebracht. Die Aufnahmebuchse 142 weist eine Ausnehmung 144 auf, die an den Rastnocken 143 angepasst ist. Falls das Steckelement 141 in die Aufnahmebuchse 142 eingeführt wird, verrastet der Rastnocken 143 mit seiner Hinterschneidung innerhalb der Ausnehmung 144, so dass ein selbsttätiges Herausgleiten des Steckelements 141 aus der Aufnahmebuchse 142 verhindert ist.

Die Aufnahmebuchse 142 weist seitlich jeweils einen Befestigungsschenkel 145 auf, wobei ein Abstand zwischen den äußeren Enden der Befestigungsschenkel geringfügig größer als der Abstand zwischen den beiden Kopfstützenstangen 4a gewählt ist. An den Befestigungsschenkeln 145 sind angrenzend zur Aufnahmebuchse 142 Gewindelöcher 146 vorgesehen. Zur Befestigung der Aufnahmebuchse 142 an den Kopfstützenstangen 4a werden die Befestigungsschenkel 145 von hinten in Kontaktanlage mit den Kopfstützenstangen 4a gebracht. An der entgegengesetzten Seite der Kopfstützenstangen 4a wird eine Befestigungsplatte 147 angebracht, die durch in die Gewindelöcher 146 eingreifende Befestigungsschrauben 148 an die Befestigungsschenkel 145 verschraubt wird. Somit wird die Aufnahmebuchse 142 fest und verliersicher an den Kopfstützenstangen 4a befestigt, wobei diese Anbringung wahlweise wieder lösbar ist.

Wenn die Aufnahmebuchse 142 an den Kopfstützenstangen 4a angebracht ist, läßt sich das Trägerelement 105 in einfacher Weise daran befestigen, indem das Steckelement 141 in die Aufnahmebuchse 142 eingesteckt wird, bis der Rastnocken 143 mit der Ausnehmung 144 verschnappt. Die Hinterschneidung des Rastnockens 143 ist dabei so ausgebildet, dass beim Aufbringen einer ausreichenden Zugkraft weg von der Aufnahmebuchse 142 sich das Steckelement 141 wieder herausziehen läßt. Somit ist ein Entfernen des Steckelements 141 bzw. des Trägerelements 105 mit der Vorrichtung 1 von der Kopfstütze 4 möglich, ohne dass die Aufnahmebuchse 142 abzuschrauben ist.

Wahlweise kann ein Zwischenstück 149 vorgesehen sein, das ein Steckelement 150 und eine Aufnahmebuchse 151 aufweist. Das Steckelement 150 des Zwischenstücks 149 kann in die Aufnahmebuchse 142 eingesteckt werden, wobei dann das Steckelement 141 bzw. das Trägerelement 105 in die Aufnahmebuchse 151 des Zwischenstücks 149 eingesteckt wird. Durch das Zwischenstück 149 wird der Abstand der Vorrichtung 1 bzw. seines Stützelements 106 von dem Fahrzeugsitz 3 bzw. der Kopfstütze 4 vergrößert. Anders ausgedrückt, können durch die Verwendung des Zwischenstücks 149 verschiedene Abstandsmaße der Vorrichtung 1 zur hinteren Breitseite der Kopfstütze 4 bzw. zur Rückenlehne 2 des Fahrzeugsitzes 3 realisiert werden.

Die Querschnittsansicht von Figur 14 zeigt einen Schnitt durch das Stützelement 106 entlang der Linie I-I von Figur 13. Diese Querschnittsansicht verdeutlicht, dass die Achsen 113 um die die Bügelarme 107a, 107b jeweils am Stützelement 106 angelenkt sind, geringfügig schräg zueinander stehen. Dies hat zur Folge, dass die freien Ende der Bügelarme 107a, 107b in ihrer Gebrauchsstellung gegen die Kopfstütze gerichtet sind. Des weiteren verdeutlicht die Querschnittsansicht von Figur 14, dass das Stützelement 106 in Bezug auf die hintere Breitseite der Kopfstütze 4 ein plattenförmiges Schutzschild 160 bildet, das die beiden Bügelarme 107a, 107b in ihrer Nichtgebrauchsstellung im Wesentlichen überdeckt. Dieses Schutzschild 160 ist auf seiner der Kopfstütze abgewandten Seite (unterer Rand in Figur 14) geringfügig konvex ausgebildet. Das Stützelement 106 besteht hierbei aus zwei im Wesentlichen kongruenten Platten 152, 153, die über einen im Wesentlichen vertikal verlaufenden Mittelsteg 154 miteinander verbunden sind. An ihrem oberen Ende sind die Platten 152, 153 über eine Deckwand 155 (Figur 3) miteinander verbunden. Die Perspektivansicht von Figur 3 macht deutlich, dass diese Deckwand 155 und die oberen Konturen der Bügelarme 107a, 107b in ihrer jeweiligen Gebrauchsstellung einen im Wesentlichen durchgehenden Bogen bilden, der ein knitterfreies Aufhängen eines Jackets oder dergleichen ermöglicht. An ihrem unteren Ende sind die Platten 152, 153 über ein Sockelelement 156 (Figur 13) miteinander verbunden, das zumindest einen Teil eines Gelenks bzw. Lagerabschnitts 110 bildet, mit dem das Stützelement um die Achse 112 gelenkig mit dem Trägerelement 105 verbunden ist.

Das Schutzschild 160 und der damit einhergehende Schutz vor möglichen Verletzungen ist beiden Ausführungsformen der Vorrichtung 1 gemäß der Figuren 1 bis 6 bzw. 7 bis 12 gemeinsam. Die Vorrichtung 1 eignet sich zur Nachrüstung an einem herkömmlichen Fahrzeugsitz und zeichnet sich durch eine hohe Aufprallsicherheit und durch kompakte Außenabmessungen aus. Durch den Mechanismus der Steckverbindung 140 kann die Vorrichtung 1 ohne Werkzeug und mit einem Handgriff wahlweise von den Kopfstützenstangen 4a entfernt bzw. durch ein Einstecken des Steckelements 141 in die Aufnahmebuchse 142 wieder daran befestigt werden.

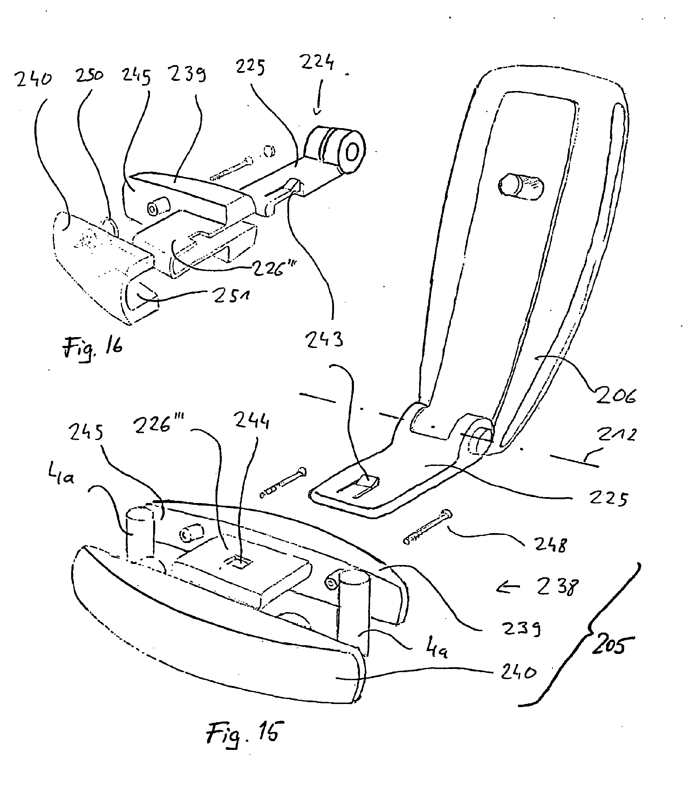

Weitere Arten der Verbindung einer Vorrichtung zum Aufhängen von Gegenständen mit einem Fahrzeugsitzteil werden in den Fig. 15 bis 17 gezeigt, wobei die Bezugszeichen derselben oder strukturell vergleichbarer Teile jeweils um 100 inkrementiert sind. Die Vorrichtung 1 kann in einer Nachrüstvariante zur Anbringung an einem Paar Kopfstützenstangen 4a oder einer anderen Kopfstützenhalterung eines Fahrzeugsitzes, oder in einer Erstausrüstungsvariante, mit einer fest an einem Fahrzeugsitz angeordneten Aufnahmebuchse 226', ausgebildet sein.

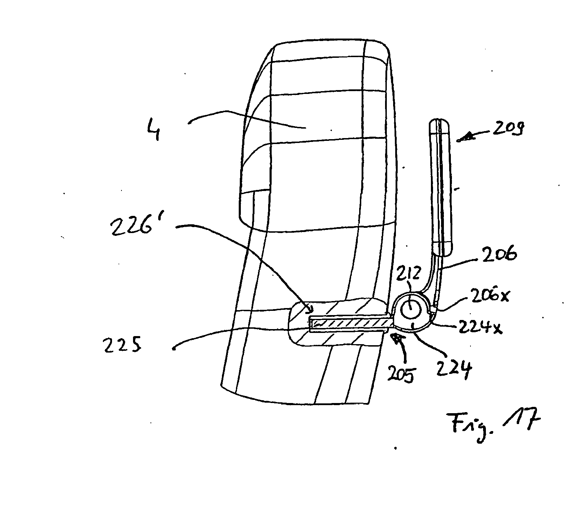

Figur 15 zeigt die Vorrichtung 1 zusammen mit einer Befestigungseinrichtung 238, die ein Trägerelement 205 bildet, mittels der sich die Vorrichtung 1 an den Kopfstützenstangen 4a des Fahrzeugsitzes 3 befestigen läßt. Die Befestigungseinrichtung 238 umfasst eine Befestigungsplatte 239 mit einer Aufnahmebuchse 226"'. Die Befestigungsplatte 239 ist mittels einer Gegenplatte 240 mit einer Schraubverbindung 248 an den Kopfstützenstangen 4a festgeklemmt, wobei die Aufnahmebuchse 226'" in der Gegenplatte 240 aufgenommen und gegen eine vertikale Verbiegung abgestützt ist. In gleicher Weise wie bei der Aufnahmebuchse 226"' von Figur 17 (dort in einen Integralsportsitz eingebaut) kann das Steckelement 225 in die Aufnahmebuchse 226'" hinein gesteckt werden. Ein an dem Steckelement 225 vorgesehener Rastnocken 243 greift dabei in eine Ausnehmung 244, die innerhalb der Aufnahmebuchse 226'" ausgebildet ist, ein und gewährleistet hierdurch einen sicheren Sitz des Steckelements 225 innerhalb der Aufnahmebuchse 226"'.

Die Befestigungseinrichtung 238 ist in Figur 16 perspektivisch in einem Halbschnitt gezeigt. Zwischen der Befestigungsplatte 239 und der Gegenplatte 240 können an beiden Seiten der Befestigungsschenkel 245 Distanzhülsen 250 vorgesehen sein, von denen in Figur 16 nur eine gezeigt ist. Solche Distanzhülsen ermöglichen eine teleskopische Anpassung des Abstandes zwischen Gegenplatte 240 und Befestigungsplatte 239, zur Anpassung an unterschiedliche Durchmesser der Kopfstützenstangen 4a. Figur 16 zeigt ebenfalls eine Aufnahmenut 251 an einer Innenseite der Gegenplatte 240, in welche Aufnahmenut eine Stirnseite der Aufnahmebuchse 226"' im verschraubten Zustand der Befestigungseinrichtung 238 aufgenommen ist. Da somit die Aufnahmebuchse 226"' gegen eine vertikale Verbiegung abgestützt ist, ist gleichzeitig ein sicherer Sitz des Steckelements 225 innerhalb der Aufnahmebuchse 226'" sichergestellt, wodurch Biegemomente infolge eines an der Vorrichtung 1 aufgehängten Gegenstands sicher über die Befestigungseinrichtung 238 in den Fahrzeugsitz abgeleitet werden können.

Der Schwenkwinkel des Stützelements 206 bei einem Verschwenken um die Achse 212 weg von der Rückenlehne 2 bzw. von der Kopfstütze 4 wird durch Anschläge 206x (am Stützelement 206), 224x (am Steckelement 225) begrenzt, wie in Fig. 17 im Einzelnen gezeigt. Die Anschläge 206x, 224x sind im Bereich des Gelenks 224 angeordnet und als einander zugekehrte, von der Achse 212 radial abstehende Flächenabschnitte ausgebildet. Entsprechende Anschläge sind auch bei den weiteren Ausführungsbeispielen vorgesehen, ohne dass dies jeweils im Einzelnen nochmals gezeigt ist.

Bei allen Ausführungsformen kann an dem Drehgelenk 224 eine Reibungsbremse vorgesehen sein. Hierdurch wird das Stützelement 206 in jeder Lage festgehalten. Die Reibungsbremse ist beispielsweise realisiert durch gefederte Bremsflächen an den Stirnseiten oder den einander zugekehrten, gegenseitig relativ zueinander verschwenkbaren Abschnitten des Drehgelenks 224. Alternativ ist sie als eine stirnseitige Verzahnung, die über einen Druckknopf lösbar ist, realisiert. Alternativ zu einer Reibungsbremse kann an dem Drehgelenk 224 auch eine Feder vorgesehen sein, die das Stützelement 206 um die Achse 212 in Richtung der Rückenlehne 2, d.h. in Fahrtrichtung nach vorne vorspannt. Eine Arretiervorrichtung fixiert dabei das Stützelement 206 in seiner von der Rückenlehne bzw. Kopfstütze wegverschwenkten Stellung und hält das Stützelement 206 gegen die Federkraft in seiner Gebrauchsstellung. Durch Betätigen einer Lösetaste, beispielsweise ein axial betätigbarer Druckknopf in Richtung der Achse 212, kann das Stützelement 206 aus seiner nach hinten verschwenkten Gebrauchsstellung gelöst werden, so dass es dann durch die Federkraft zurück in seine Nichtgebrauchsstellung, d.h. in Richtung der Rückenlehne bzw. Kopfstütze zurückverschwenkt, wobei es dabei frei nach vorne bewegbar ist und die Kopfstütze 4 einen Anschlag bildet.

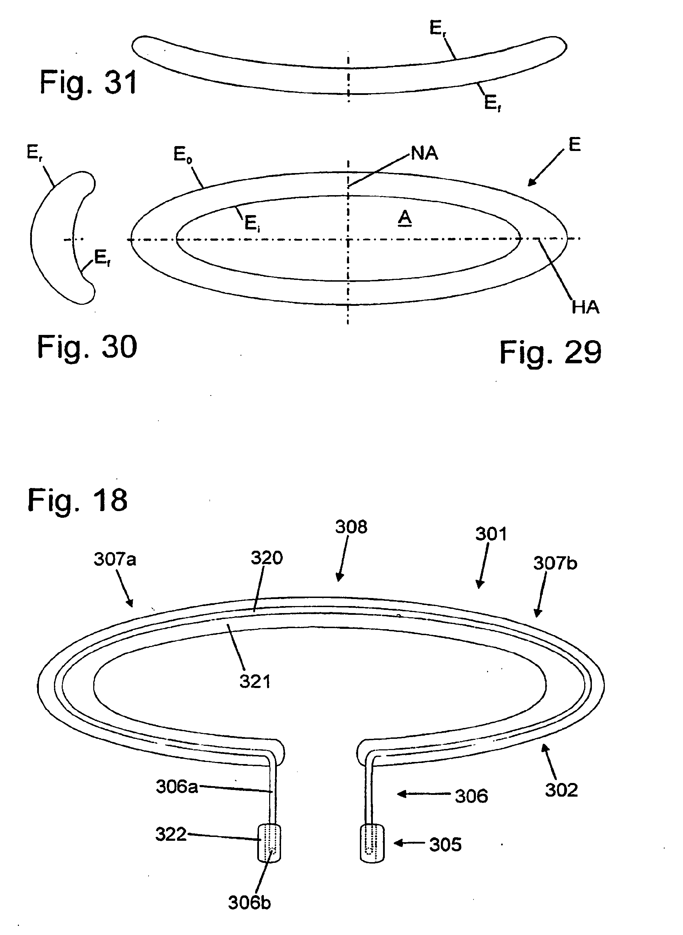

In Fig. 18 bis 31 werden weitere bevorzugte Ausführungsbeispiele erfindungsgemäßer Vorrichtungen zum Aufhängen von Kleidungsstücken an ein Fahrzeugsitzteil, wie eine Rückenlehne 2, eine Kopfstütze 4 oder eine Kopfstützenhalterung 4a eines Fahrzeugsitzes 3 beschrieben. Gemeinsam ist diesen Ausführungsbeispielen, dass die Bügelarme, die eine Auflagefläche für ein Kleidungsstück wie eine Jacke oder ein Sacko definieren, zugleich die Gestalt einer Ellipse umschreiben, wobei die Ellipse selbst wiederum zur besseren Anpassung an den Schnitt der aufzuhängenden Kleidungsstücke in der dargestellten bevorzugten Ausgestaltung von der sonst prinzipiell möglichen Anordnung in einer orthogonalen Ebene abweicht und sphärisch im Raum gekrümmt ist. Diese Krümmung wird besonders gut in der Ellipse, die in Fig. 29 bis 31 dargestellt ist, erkennbar: Mit HA ist in Fig. 29 die Hauptachse der Ellipse bezeichnet, mit NA die Nebenachse der Ellipse. Die beiden Achsen HA und NA schneiden sich in der Mitte der Ellipse.

Im Falle einer flach ausgebildeten Ellipse kreuzen sich die Achsen HA und NA in einer orthogonalen Ebene. Tatsächlich weist aber die Ellipse einen gekrümmten Verlauf entlang der Hauptachse, also um die Nebenachse NA auf. Hingegen ist die Nebenachse NA ohne Krümmung, so dass die Ellipse mit der lotrechten oder vertikalen Nebenachse NA aufgestellt werden kann. In Fig. 31 erkennt man den Verlauf der Krümmung der Hauptachse HA, die bei der Ansicht von oben in der Mittelebene des gezeigten Ellipsenabschnitts liegt. In der seitlichen Ansicht aus Fig. 30 erkennt man äußerst links eine durch den Radius der Hauptachse HA fortgebogene Spitze der Ellipse E, während die ballig erscheinende rechte Seite durch die Begrezung einer Aussparung A gebildet ist. Aus der Ansicht von oben gemäß Fig. 31 erkennt man, dass die Nebenachse NA keinen Radius aufweist. Es ist aber möglich, auch die Nebenachse NA mit einem Radius zu versehen, entweder gleichgerichtet oder auch entgegengesetzt der Richtung des Radius der Hauptachse HA. Soweit die nachstehenden Ausführungsbeispiele also sphärische Ellipsen zeigen, sind diese (nur) entlang der Hauptachse HA gebogen.

Man erkennt, dass die Ellipse E eine zentrale elliptische Ausnehmung A aufweist, so dass die konvexe Innenkontur Eᵢ der Ellipse E eine Ellipse nach Innen begrenzt, während die konkave Außenkontur Eₒ die Kontur einer Ellipse nach außen begrenzt.

Mit Eᵣ ist die vorderseitige Begrenzungsebene der Ellipse bezeichnet, mit E_{f} die hintere Begrenzungsebene der Ellipse E.

Die in den Ausführungsbeispielen gezeigte Ellipse E ist sowohl bezüglich der Hauptachse HA als auch bezüglich der Nebenachse NA aus zwei spiegelbildlichen Ellipsensegmenthälften gebildet. Damit sind die sich jeweils diametral gegenüberliegenden Ellipsensegmentviertel punktsymmetrisch bezüglich des Schnittpunktes der beiden Achsen HA, NA.

Als jeweils ein Bügelarm wird definiert dasjenige Ellipsensegment, das sich einerseits der Nebenachse NA befindet, wobei dem Bügelarm Segmentabschnitte zu einer vollen Ellipsensegmenthälfte fehlen können. Man erkennt also, dass ein Bügelarm sowohl den Segmentbereich einer Ellipse oberhalb der Hauptachse HA als auch den Segmentbereich der Ellipse unterhalb der Hauptachse HA einschließt.

Im Querschnitt ändern sich das Querschnittsprofil des Bügelarms über seinen Verlauf, wobei wegen der spielbildlichen Ausgestaltung vorliegend nur der Verlauf, ausgehend von dem der Nebenachse NA zugekehrten Profil zu dem der Hauptachse HA zugekehrten Profil erläutert wird. Nahe der Nebenachse NA ist der Querschnitt des Bügelarms überwiegend rund, und nahe der Hauptachse HA ist der Querschnitt des Bügelarms überwiegend oval oder elliptisch, mit dem vorteilhaften Effekt, dass besonders die Radien im Bereich der Hauptachse HA vergrößert sind, und scharfe Spitzen vermieden werden. Das in Fig. 18 gezeigte bevorzugte Ausführungsbeispiel einer Vorrichtung 301 zum Aufhängen von Kleidungsstücken umfasst ein Trägerelement 305 zur Verbindung mit dem Fahrzeugsitz 3, ein an das Trägerelement 305 anschließendes Stützelement 306, das selbst mit einem Bügelkorpus 302 in Vebindung steht. Der Bügelkorpus 302 bildet eine sphärische Ellipse E, mit der zwei Bügelarme 307a, 307b wie vorstehend definiert angeordnet sind, wobei die beiden Bügelarme 307a, 307b über einen oberen Verbindungsabschnitt 308 in Verbindung stehen. Der obere Verbindungsabschnitt 308 ist gegenüberliegend dem Stützelement 306 angeordnet und entspricht der Stoßebene der beiden Bügelarme 307a, 307b. Man erkennt vorliegend, dass der Bügelkorpus 302 als Ellipsensegment aus dem beiden Bügelarmen 307a, 307b, welches nahezu geschlossen ausgebildet ist, geformt ist. Man erkennt ferner, dass die Bügelarme in dem Bereich gegenüber dem Verbindungsabschnitt 308 voneinander beabstandet sind.

Die Ellipse mit den zwei Bügelarmen 307a, 307b und dem oberen Verbindungsabschnitt 308 umfasst einen Kern 320, der in Fig. 18 als Metallstange ausgebildet ist, die von Ummantelung 321 aus einem weichen Kunststoff umgeben ist, so dass der Bügelkorpus 302 ästhetisch, haptisch und bezüglich Sicherheit vorteilhaft ist.

Das Stützelement 306 ist durch zwei aus dem Bügelkorpus 302 herausgeführte, bezogen auf die Ebene der Nebenachse NA der Ellipse spiegelbildliche Abschnitte des Kerns 320 gebildet, welche radial nach außen zunächst abgewinkelt sind, um - in Einbausituation gesehen - einen langgestreckten ersten Abschnitt 306a des Stützelements 306 zu bilden. In der Höhe der Kopfstützenstangen 4a ist das Stützelement 306 nochmals um 90° unter Bildung eines weiteren Abschnitts 306b abgebogen, dessen Ende ein Adapterstück 322 trägt. Das Trägerelement 305 weist daher zwei spiegelbildliche derartige Adapterstücke 322 auf, die beide voneinander weg durch die Eigenspannung des Kerns 320 vorgespannt sind, so dass die Adapterstücke 322 unter der Vorspannung des Kerns 320 in Anlage mit den Kopfstützenstangen 4a gelangen und dort eingespannt werden können. Damit bilden die Adapterstücke 322 das Trägerelement 305.

Es ist möglich, denjenigen Bereich, in dem die ersten Abschnitte 306a aus dem Bügelkorpus 302 austreten, zur Vervollständigung der Ellipse E miteinander zu verbinden, wobei das Stützelement 306 dann als separater, elatischer Drahtbügel ausgebildet ist, der an den Bügelkorpus 302 befestigt ist.

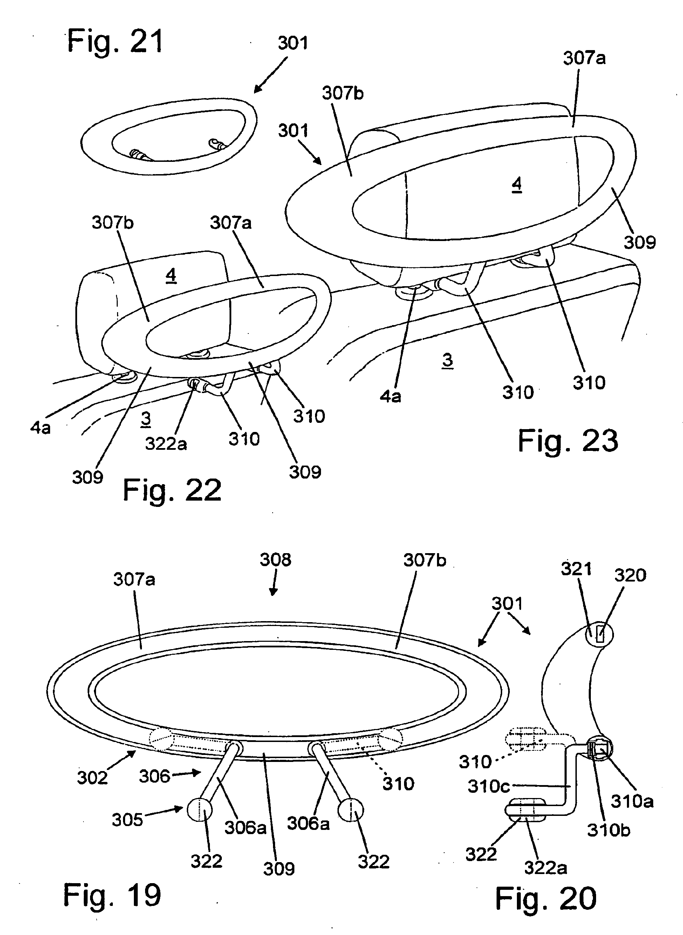

In Fig. 19 bis 23 ist ein weiteres bevorzugtes Ausführungsbeispiel einer Vorrichtung 301 zum Aufhängen von Kleidungsstücken gezeigt. Dieselben Bezugszeichen wie bei dem vorangegangenen Ausführungsbeispiel bezeichenen dieselben oder strukturell vergleichbare Teile.

Bei dieser Vorrichtung 301 ist der Bügelkorpus 302 durch eine vollständig geschlossen geführte Kontur einer Ellipse E bzw. ein geschlossenes Ellipsensegment gebildet, die einen Kern 320 aus einem harten Kunststoff aufweist, der im Querschnitt rechteckig ausgebildet ist (vergleiche Fig. 20), wobei ein weiches, schaumähnliches Kunststoffmaterial 321 den Kern 320 über dessen gesamten Verlauf umgibt. Beiderseits der Nebenachse NA sind die Bügelarme 307a, 307b gebildet, die in einem oberen Verbindungsabschnitt 308 und in einem unteren Verbindungsabschnitt 309, welche beide im Bereich der Nebenachse NA angeordnet sind, mit ihren einander zugekehrten Enden miteinander verbundensind. Der Bügelkorpus 302 besteht also aus den beiden zumindest miteinander zusammengefügten, vorliegend sogar ineinander übergehenden Bügelarmen 307a, 307b.

Das Stützelement 306 ist vorliegend gebildet durch zwei Füße 310, die einander gegenüberliegend, bezogen auf die Ebene der Nebenachse NA, angeordnet sind und schwenkbar in dem Kern 320 gelagert sind. Dem hierdurch gebildeten Gelenk 310a ist eine Feder 310b zugeordnet, die den Fuß 310 von der Nebenachse NA fort in Richtung auf die Hauptachse HA vorspannt. Ein in das Gelenk 310a integrierter Anschlag stellt sicher, dass der Fuß 310 nicht über eine Stellung hinaus verschwenkbar ist, die mit dem Verlauf der Kontur der Ellipse E ausgefluchtet ist. Diese Stellung bildet eine Ruhestellung für den Fall, dass die Vorrichtung 301 nicht an einen Fahrzeugsitz 3 angeschlossen ist.

Ein Fuß 310 weist im Wesentlichen eine Doppelwinkelform bzw. eine Z- oder S-Form auf, wobei das eine Ende des Z das Gelenk 310a bildet und das andere Ende des Z ein Adapterstück 322 für den Anschluss an einen Fahrzeugsitz 3 bildet. Bei dem Adapterstück 322 handelt es sich um ein zweckmäßigerweise durch Spritzgießen um den Fuß 310 aus Metall angespritztes Glied, welches zum formschlüssigen Anlegen an die stangenförmige Gestalt der Kopfstützenhalterung 4a ausgebildet ist, wobei die beiden Adapterstück 322 das Trägerelement 305 bilden. Die Abschnitte des Fußes 310, die das Gelenk 310a bzw. das Adapterstück 322 tragen, sind zueinander zumindest annähernd parallel, so dass der unter der Vorspannung der Feder 310b ausgeführte Schwenkweg des Adapterstücks 322 im Wesentlichen einem Kreissegment entspricht. Der mittlere Basis-Abschnitt 306a des Fußes 310 bewirkt bei Anschluss an einen Fahrzeugsitz 3 ein etwas erhöhtes Anbringen des Bügelkorpus 302 , so dass bequem und in ausreichendem Abstand vom Boden ein Kleidungsstück hierauf abgelegt werden kann.

In Fig. 22 und 23 erkennt man, dass die beiden Füße 310 entgegen der Vorspannung der Feder 310b zueinander hinbewegt werden können, bis deren Abstand kleiner ist als der Abstand von zwei Kopfstützenstangen 4a. Dann lässt sich der vorstehende Bereich des Stützelements 306 , der die Adapterstücke 322 aufweist, zwischen Kopfstütze 4 und Fahrersitz 3 einsetzen, wobei die Adapterstücke 322 sich innenseitig an die Kopfstützstangen 4a anpassen, und unter der Vorspannung der Feder 310b kraftschlüssig gegen die Kopfstützenstangen 4a ausgerückt werden. In Fig. 22 ist die Aussparung 322a in dem Adapterstück 322 für den Anschluss an die Kopfstützstange 4a besonders gut zu erkennen. Überdies kann eine Anpassung an Kopfstützstangen 4a mit verschiedenen Abständen voneinander erfolgen. Es ist alternativ möglich, das Trägerelement auch außenseitig an die Kopfstützstangen 4a anzupassen, oder die Adapterstücke 322 als Clipsglieder auszubilden, von denen jedes formschlüssig eine Kopfstützenstange 4a hält.

Die vollständig geschlossene Ellipse E des Bügelkorpus 302 zeichnet sich durch eine besonders hohe Stabilität und geringe Verwindbarkeit aus, die einen sparsamen Materialeinsatz ermöglicht. Darüber hinaus weist diese eine ästhetisch ansprechende Form auf, die sich harmonisch in die Gestaltung der Rückseite eines Fahrzeugsitzes 3 integriert. Die geschlossene und rundum mit großen Radien versehene Form des Bügelkorpus 302 ist auch besonders vorteilhaft zur Vorbeugung gegen Verletzungen von Passagieren. Bei einem unbeabsichtigten Ablösen verlagern sich die Füße 310 überdies in eine an einen Ellipsensegment anliegende Stellung, was ein Verletzungsrisiko bei einem Unfall vermindert und eine platzsparende Aufbewahrung ermöglicht.

Es ist möglich, zum besseren Anschließen der Füße 310 an die Kopfstützenstangen 4a im Bereich des Gelenks 310a eine Verriegelung vorzusehen, die die Schwenkbeweglichkeit des Zapfenabschnitts des Fußes 310 in dem Gelenk 310a blockiert. Hierdurch ist sichergestellt, dass durch ungünstige Gewichtsbelastung das Bügelkorpus 302 nicht versehentlich die Feder 310b gespannt wird, wodurch das Trägerelement 305 ausser Eingriff mit dem Fahrzeugsitz 3 gelangen könnte.

In Fig. 19 und Fig. 20 ist in gestrichelter Darstellung der Fuß 310 nochmals in seiner anschlagenden Ruheposition dargestellt, wenn die Vorrichtung 301 von dem Fahrzeugsitz 3 demontiert ist.

Die beiden die Bügelarme 307a, 307b bildende Segmente der Ellipse E sind über die oberen Verbindungsabschnitte 308 und den unteren Verbindungsabschnitt 309 miteinander verbunden. Es ist möglich, auch die Ausnehmung A zu schließen, beispielsweise mit dem Kunststoffmaterial 321, aber auch mit einem transparenten oder opaken Folienmaterial, einer in das Kunststoffmaterial 321 eingespritzten Struktur in der Art eines Netzes, aber auch mit einem als Beutel ausgebildeten Material, welches zum Verstauen kleiner Gegenstände geeignet ist.

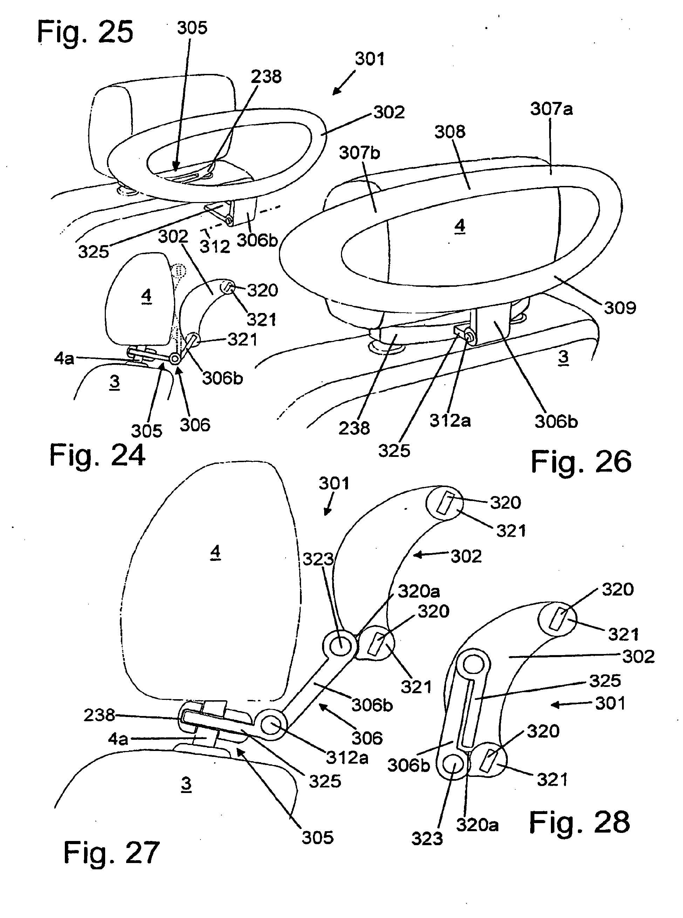

Fig. 24 bis 26 zeigt noch ein weiteres bevorzugtes Ausführungsbeispiel einer erfindungsgemäßen Vorrichtung 301 zum Aufhängen von Kleidungsstücken. Während der Bügelkorpus 302 wie bei dem vorangegangenen Ausführungsbeispiel aufgebaut ist, unterscheiden sich das Stützelement 306 und das Trägerelement 305 dahingehend, dass dieselbe Befestigungseinrichtung 238, die in Fig. 15/16 gezeigt wird, vorliegend zum Anschließen der Vorrichtung 301 als Trägerelement 305 vorgesehen ist. Insoweit wird auf die dortige Beschreibung hingewiesen. Das Stützelement 306 umfasst ein Steckelement 325, welches über ein Gelenk 312a, das eine Achse 312 definiert, mit einem Tragabschnitt 306b gelenkig verbunden ist. Hierbei weist das Gelenk 312a einen Anschlag auf, der den Schwenkwinkel zwischen Steckelement 325 und Tragabschnitt 306b derart begrenzt, dass die Bügelarme 307a, 307b in der Gebrauchsstellung genügend weit von der Kopfstütze 4 beabstandet sind - der bzw. die Anschläge sind entsprechend dem Aufbau in Fig. 17 gestaltet. Hierdurch ist sichergestellt, dass auch bei Gewichtsbelastung aufgrund der aufgehangenen Kleidungsstücke sich der Öffnungswinkel zwischen dem Tragabschnitt 306b und dem Steckelement 325 nicht weiter aufspreizt. Ferner ist in dem Gelenk 312a auch eine Feder angeordnet, die den Tragabschnitt 306b zu einer Schwenkbewegung in Richtung auf das Steckelement 325 vorspannt, so dass bei nicht belastetem Stützelement dieses in Anlage mit der Rückseite der Kopfstütze 4 gelangt, wie in Fig. 24 gestrichelt gezeigt. Hierbei nimmt die Aussparung der Ellipse E vorteilhaft die leicht ballig ausgeführte Rückseite der Kopfstütze 4 auf, so dass eine gute Packungsdichte erreicht wird. In der Gebrauchsstellung ist der Tragabschnitt 306b gegen die Federkraft arretiert, wobei die Arretierung beispielsweise über einen am Gelenk 312a angeordneten Druckknopf gelöst werden kann. Der Tragabschnitt 306b ist vorzugsweise einstückig mit dem Kern 320 des Bügelkorpus 302 ausgebildet, um eine besonders stabile Verbindung zu erreichen.

Ein weiteres bevorzugtes Ausführungsbeispiel einer erfindungsgemäßen Vorrichtung zum Aufhängen von Kleidungsstücken gemäß Fig. 27 und 28 unterscheidet sich von dem vorangegangenen Ausführungsbeispiel im Wesentlichen durch die Ausgestaltung des Stützelements 306. Dieses weist wieder gelenkig miteinander verbundene Tragabschnitt 306b und Steckelement 325 auf, der Tragabschnitt 306b steht aber nicht umfangsmäßig aus dem Kern 320 vor, sondern ist mit einem Kernfortsatz 320a gelenkig über ein Gelenk 323 verbunden. Auch das Gelenk 323 weist eine anschlagende Begrenzung des Schwenkwinkels auf, um ein Überdrehen bei Gewichtsbelastung zu verhindern. Hierdurch ist eine besonders kompakte und platzsparende Aufbewahrung der Vorrichtung 301 ermöglicht, wenn diese aus der Befestigungseinrichtung 238 abgelöst ist, weil dann der Tragabschnitt 306b mit den beiden Gelenken 312a, 323 in Richtung auf die Aussparung der Ellipse E einfaltbar ist, und dadurch eine kompakte Verstauung ermöglicht. Überdies wird ein Rastnocken des Steckelements 325 hierdurch gegen Beschädigungen geschützt, da sich dieser zwischen dem Steckelement 325 und dem Tragabschnitt 306b geschützt befindet.

Die Erfindung ist vorstehend anhand von Ausführungsbeispielen erläutert worden, in denen der Bügelkorpus 302 im Wesentlichen elliptische Gestalt aufweist. Es versteht sich, dass es nicht zwingend erforderlich ist, dass die beiden Bügelarme 307a, 307b sowohl über ihre einander zugekehrten Enden mit einem oberen Verbindungsabschnitt 308 als auch über ihre einander abgekehrten Enden mit einem unteren Verbindungsabschnitt 309 miteinander verbunden sind, sondern dass es jeweils ausreicht, dass nur der obere Verbindungsabschnitt 308 (wie beispielsweise in Fig. 18 gezeigt) oder nur der untere Verbindungsabschnitt 309 vorgesehen ist.

In den vorstehend beschriebenen Ausführungsbeispielen sind die Bügelarme 307a, 307b als zur Ebene der Nebenachse NA spiegelbildliche Halbsegmente einer Ellipse E dargestellt worden, wobei die Verbindungsabschnitte 308, 309 im wesentlichen linienförmig im Bereich der Nebenachse NA vorgesehen sind. Hierdurch stehen die Bügelarme 307a, 307b jeweils selbst mit dem Stützelement 306 in Verbindung, und können an diesem auch schwenkbar gelagert sein. Es ist aber auch möglich, beispielsweise den unteren Verbindungsabschnitt 309 so zu verlängern, dass die beiden Bügelarme 307a, 307b einen Abstand zueinander und zu der Nebenachse NA aufweisen.

Die Erfindung ist vorstehend anhand eines eines Bügelkorpus 302 erläutert worden, welches durch ein Trägerelements 305 an die Kopfstützenstangen 4a eines Fahrzeugsitzes angeschlossen ist. Es versteht sich, dass ein das Trägerelement 305 auch an die Kopfstütze oder an die rückwärtige Fläche der Sitzrückenlehne anschließbar ist (wie z.B. in Fig. 17 gezeigt), wobei der als überwiegend oder vollständig geschlossene Ellipse ausgebildete Bügelkorpus 302 in einer Nichtgebrauchsstellung auch in die entsprechende Sitzpartie integriert oder gegen diese angelehnt vorgesehen sein kann. Hierzu kann die Ausgestaltung des eingefalteten Stützelements 306 aus Fig. 28 so weitergebildet sein, dass ein Steckelement in der eingefalteten Stellung des Stützelements 306 den Bügelkorpus 302 in einer platzsparenden, eher abgesenkten Nichtgebrauchsstellung an den Fahrzeugsitz anschließt, und in einer Gebrauchsstellung das entfaltete Stützelements 306 den Bügelkorpus 302 im wesentlichen in Höhe der Kopfstütze 4 anhebt.

Die Erfindung ist vorstehend in mehreren Ausführungsbeispielen anhand von einem Bügelkorpus in Gestalt einer Ellipse E erläutert worden. Es ist zu verstehen, dass die Form und die Proportionen der Ellipse von der bevorzugten Ausfürungsform abweichen können, ohne dass hierdurch der Charakter der Gestalt einer Ellipse verloren geht und/oder eine andere Vorrichtung entsteht. Insbesondere können die Hauptachse HA, die Nebenachse NA, die Krümmung derselben frei und unabhängig voneinander variiert werden. Auch kann die Innenkontur unabhängig von der Außenkontur gewählt werden.

## Patentansprüche

1. Vorrichtung zum Aufhängen von Kleidungsstücken an ein Fahrzeugsitzteil, wie eine Rückenlehne (2), Kopfstütze (4) oder eine Kopfstützenhalterung (4a) eines Fahrzeugsitzes (3), umfassend
ein Trägerelement (105, 145, 147, 205, 238, 305), das dem Fahrzeugsitzteil (2, 4, 4a) zugeordnet ist,
ein Stützelement (106, 206, 306, 306b), das sich im Wesentlichen vertikal nach oben erstreckt und an seinem unteren Ende über eine lösbare Kupplung (140, 141, 142, 225, 226', 226"', 325, 238) mit dem Trägerelement (105, 145, 147, 205, 238, 305) verbunden ist, und
zwei Bügelarme (107a, 107b, 307a, 307b), die am oberen Ende des Stützelements (106, 206, 306, 306b) angeordnet sind und gemeinsam mit dem Stützelement (106, 206, 306, 306b) einen kleiderbügelartigen Ständer bilden, **dadurch gekennzeichnet,**
**dass** das Stützelement (106, 206, 306, 306b) mit dem Trägerelement (105, 145, 147, 205, 238, 305) derart beweglich verbunden ist, dass es zusammen mit den Bügelarmen (107a, 107b, 307a, 307b) zwischen einer Nichtgebrauchsstellung und einer Gebrauchsstellung verlagerbar und in der Nichtgebrauchsstellung frei gegen die hintere Breitseite der Kopfstütze (4) bewegbar ist, wobei die Gebrauchsstellung durch einen Anschlag (224x, 206x) so definiert ist, dass die Bügelarme (107a, 107b, 307a, 307b) zum Aufhängen zumindest eines Kleidungsstücks einen von der hinteren Breitseite der Kopfstütze (4) ausreichenden Abstand einnehmen.

2. Vorrichtung nach Anspruch 1, bei der das Stützelement (106, 206, 306, 306b) am Trägerelement (105, 145, 147, 205, 238, 305) um eine im Wesentlichen parallel zur hinteren Breitseite der Rückenlehne (2) und/oder der Kopfstütze (4) und im Wesentlichen horizontal verlaufende Achse (112, 212, 312) schwenkbar angelenkt ist.

3. Vorrichtung nach Anspruch 2, bei der die Achse (112, 212, 312) am unteren Ende des Stützelements (106, 206, 306, 306b) angeordnet ist.

4. Vorrichtung nach Anspruch 2 oder 3, bei der die Achse (112, 212. 312) des Stützelements (106, 206, 306, 306b) aus einem Gelenk (110, 224, 312a) mit einer Reibungsbremse, die das Stützelement (106, 206, 306, 306b) in jeder Schwenklage festhält, gebildet ist.

5. Vorrichtung nach einem der Ansprüche 1 bis 4, bei der das Stützelement (106, 206, 306, 306b) in seiner Nichtgebrauchsstellung und/oder in seiner Gebrauchsstellung lösbar verriegelbar ist.

6. Vorrichtung nach Anspruch 5, bei der das Stützelement (106, 206, 306, 306b) beim Auftreten einer Aufprallkraft über die Nichtgebrauchsstellung hinaus in Fahrtrichtung nach vorne gegen die Rückenlehne (2) bzw. die Kopfstütze (4) bewegbar ist.

7. Vorrichtung nach einem der Ansprüche 1 bis 6, bei der das Stützelement (106, 206, 306, 306b) auf seiner der Kopfstütze (4) und/oder der Rückenlehne (2) abgewandten Seite in Bezug auf die hintere Breitseite der Kopfstütze (4) und/oder der Rückenlehne (2) ein plattenförmiges Schutzschild (160) bildet.

8. Vorrichtung nach einem der Ansprüche 1 bis 7, bei der das Trägerelement (105, 145, 147, 205, 238, 305) als Steckverbindung (140) mit einem Steckelement (141, 225, 325) und einer Aufnahmebuchse (142, 226', 226"') ausgebildet ist, wobei das Steckelement (141, 225, 325) am Stützelement (106, 206, 306, 306b) angelenkt ist.

9. Vorrichtung nach Anspruch 8, bei der die Aufnahmebuchse (142, 226', 226"') mittels eines Befestigungselements (145, 147, 238) zwischen zwei Stangen (4a) einer Kopfstützenhalterung (4a) angeordnet ist.

10. Vorrichtung nach Anspruch 8 oder 9, bei der am Steckelement (141, 225, 325) ein verformbarer Rastnocken (143, 243) angeordnet ist, der in einer daran angepassten Ausnehmung (144, 244) in der Aufnahmebuchse (142, 226"') verrastbar ist.

11. Vorrichtung nach Anspruch 2 und einem der Ansprüche 8, 9 oder 10, wobei das Steckelement (325) sich um die horizontal verlaufende Achse (312) auf einen Stützabschnitt (306b) des Stützelements (306) klappen lässt.

## Claims

1. Device for suspending items of clothing on a vehicle seat part such as a seat backrest (2), headrest (4) or headrest holder (4a) of a vehicle seat (3), comprising a carrier element (105, 145, 147, 205, 238, 305) assigned to the vehicle seat part (2, 4, 4a),
a support element (106, 206, 306, 306b) which extends substantially vertically upward and at its lower end is connected to the carrier element (105, 145, 147, 205, 238, 305) via a releasable coupling (140, 141, 142, 225, 226', 226"', 325, 238), and
two yoke arms (107a, 107b, 307a, 307b) which are arranged at the upper end of the support element (106, 206, 306, 306b) and together with the support element (106, 206, 306, 306b) form a coathanger-like stand, **characterised in that**
the support element (106, 206, 306, 306b) is movably connected to the carrier element (105, 145, 147, 205, 238, 305) such that together with the yoke arms (107a, 107b, 307a, 307b), it can be moved between an out-of-use position and a usage position, and in the out-of-use position can be moved freely against the rear wide side of the headrest (4), wherein the usage position is defined by a stop (224x, 206x) such that the yoke arms (107a, 107b, 307a, 307b) assume a distance from the rear wide side of the headrest (4) which is sufficient for suspending at least one item of clothing.

2. Device according to claim 1, wherein the support element (106, 206, 306, 306b) is hinged on the carrier element (105, 145, 147, 205, 238, 305) to be swivellable about an axis (112, 212, 312) running substantially parallel to the rear wide side of the backrest (2) and/or headrest (4) and substantially horizontal.

3. Device according to claim 2, wherein the axis (112, 212, 312) is arranged on the lower end of the support element (106, 206, 306, 306b).

4. Device according to claim 2 or 3, wherein the axis (112, 212, 312) of the support element (106, 206, 306, 306b) is formed by a hinge (110, 224, 312a) with a friction brake which holds the support element (106, 206, 306, 306b) in any swivel position.

5. Device according to any of claims 1 to 4, wherein the support element (106, 206, 306, 306b) can be locked releasably in its out-of-use position and/or in its usage position.

6. Device according to claim 5, wherein the support element (106, 206, 306, 306b) can be moved forward in the direction of travel beyond the out-of-use position, against the backrest (2) or headrest (4), on occurrence of an impact force.

7. Device according to any of claims 1 to 6, wherein the support element (106, 206, 306, 306b), on its side facing away from the headrest (4) and/or the backrest (2), forms a plate-like shield (160) in relation to the rear wide side of the headrest (4) and/or backrest (2).

8. Device according to any of claims 1 to 7, wherein the carrier element (105, 145, 147, 205, 238, 305) is configured as a plug connection (140) with a plug element (141, 225, 325) and a socket (142, 226', 226"'), wherein the plug element (141, 225, 325) is hinged on the support element (106, 206, 306, 306b).

9. Device according to claim 8, wherein the socket (142, 226', 226"') is arranged between two rods (4a) of a headrest holder (4a) by means of a fixing element (145, 147, 238).

10. Device according to claim 8 or 9, wherein a deformable catch cam (143, 243), which can catch in a corresponding recess (144, 244 in the socket (142, 226"'), is arranged on the plug (141, 225, 325).

11. Device according to claim 2 and one of claims 8, 9 or 10, wherein the plug (325) can be folded about the horizontally running axis (312) on a support portion (306b) of the support element (306).

## Revendications

1. Dispositif pour suspendre des pièces de vêtement à une partie d'un siège de véhicule, comme un dossier (2), un appui-tête (4), ou un support d'appui-tête (4a) d'un siège de véhicule (3), comprenant
un élément porteur (105, 145, 147, 205, 238, 305) associé à la partie de siège de véhicule (2, 4, 4a),
un élément support (106, 206, 306, 306b) s'étendant sensiblement verticalement vers le haut, et relié à l'élément porteur (105, 145, 147, 205, 238, 305) à son extrémité inférieure par l'intermédiaire d'un raccord amovible (140, 141, 142, 225, 226', 325, 238), et
deux bras de cintre (107a, 107b, 307a, 307b) qui sont disposés sur l'extrémité supérieure de l'élément support (106, 206, 306, 306b) et qui forment, conjointement avec l'élément support (106, 206, 306, 306b), un support du type porte-manteau, **caractérisé en ce que**
l'élément support (106, 206, 306, 306b) est relié à l'élément porteur (105, 145, 147, 205, 238, 305) de manière mobile, **en ce que** conjointement avec les bras de cintre (107a, 107b, 307a, 307b), il est mobile entre une position d'utilisation et une position de non-utilisation, et dans la position de non-utilisation, il peut être déplacé contre le large côté arrière libre de l'appui-tête (4), la position d'utilisation étant définie par une butée (224x, 206x) de telle sorte que les bras de cintre (107a, 107b, 307a, 307b) occupent une étendue suffisante du large côté arrière de l'appui-tête (4) pour suspendre au moins une pièce de vêtement.

2. Dispositif selon la revendication 1, **caractérisé en ce que** l'élément support (106, 206, 306, 306b) est relié de manière articulée à l'élément porteur (105, 145, 147, 205, 238, 305) sur un axe (112, 212, 312) s'étendant parallèlement au large côté arrière du dossier (2) et/ou de l'appui-tête (4), et sensiblement horizontalement.

3. Dispositif selon la revendication 2, **caractérisé en ce que** l'axe (112, 212, 312) est agencé à une extrémité inférieure de l'élément support (106, 206, 306, 306b).

4. Dispositif selon la revendication 2 ou 3, **caractérisé en ce que** l'axe (112, 212, 312) de l'élément support (106, 206, 306, 306b) est agencé avec un frein à friction sur une articulation (110, 224, 312a), qui retient l'élément support (106, 206, 306, 306b) dans chaque position de pivotement.

5. Dispositif selon l'une quelconque des revendications 1 à 4, **caractérisé en ce que** l'élément support (106, 206, 306, 306b) peut être verrouillé de manière amovible dans sa position de non-utilisation et/ou dans sa position d'utilisation.

6. Dispositif selon la revendication 5, **caractérisé en ce que** l'élément support (106, 206, 306, 306b) peut être déplacé par l'apparition d'une puissance d'impact, dans la position de non-utilisation, vers l'intérieur en direction de l'avant contre le dossier (2) ou plutôt l'appui-tête (4).

7. Dispositif selon l'une quelconque des revendications 1 à 6, **caractérisé en ce que** l'élément support (106, 206, 306, 306b), sur son côté opposé à l'appui-tête (4) et/ou au dossier (2), forme un siège pour enfant en forme de plateforme (160) au niveau du large côté arrière de l'appui-tête (4) et/ou du dossier (2).

8. Dispositif selon l'une quelconque des revendications 1 à 7, **caractérisé en ce que** l'élément porteur (105, 145, 147, 205, 238, 305) est réalisé sous la forme d'un raccord enfichable (140) avec un élément enfichable (141, 225, 325) et un manchon de réception (142, 226', 226"'), de telle sorte que l'élément enfichable (141, 225, 325) est articulé sur l'élément support (106, 206, 306, 306b).

9. Dispositif selon la revendication 8, **caractérisé en ce que** le manchon de réception (142, 226', 226"') est agencé, au moyen d'un élément de fixation (145, 147, 233), entre deux barres (4a) d'un support d'appui-tête (4a).

10. Dispositif selon la revendication 8 ou 9, **caractérisé en ce qu'**un ergo d'encliquetage déformable (143, 243) est agencé sur l'élément enfichable (141, 225, 325), qui peut s'encliqueter dans un logement (144, 244) prévu à cet effet et situé dans le manchon de réception (142, 226', 226"').

11. Dispositif selon la revendication 2 et l'une quelconque des revendications 8, 9 ou 10, **caractérisé en ce que** l'élément enfichable (325) peut se rabattre autour de l'axe s'étendant horizontalement (312) sur un tronçon de support (306b) de l'élément support (306).
